(19) **Europäisches Patentamt / European Patent Office / Office européen des brevets**

(11) **EP 1 757 146 B1**

(12) **EUROPÄISCHE PATENTSCHRIFT**

(45) Veröffentlichungstag und Bekanntmachung des Hinweises auf die Patenterteilung:
**09.01.2008  Patentblatt 2008/02**

(21) Anmeldenummer: **05744980.3**

(22) Anmeldetag: **19.05.2005**

(51) Int Cl.:
*H04Q 7/38* (2006.01)     *H04B 7/06* (2006.01)

(86) Internationale Anmeldenummer:
**PCT/EP2005/052316**

(87) Internationale Veröffentlichungsnummer:
**WO 2005/122619 (22.12.2005 Gazette 2005/51)**

(54) **Verfahren zur Zuweisung von Übertragungskapazitäten bei einer Signalübertragung, Basisstation und mobiles Endgerät**

Method for allocating transmission capacities during a signal transmission, base station, and mobile terminal

Procédé pour allouer des capacités de transmission lors d'une transmission de signaux, station de base et terminal mobile

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **14.06.2004  DE 102004028703**

(43) Veröffentlichungstag der Anmeldung:
**28.02.2007  Patentblatt 2007/09**

(73) Patentinhaber: **SIEMENS AKTIENGESELLSCHAFT**
**80333 München (DE)**

(72) Erfinder:
• **GENG, Norbert**
**82205 Gilching (DE)**
• **RAAF, Bernhard**
**82061 Neuried (DE)**

(56) Entgegenhaltungen:
**US-A1- 2003 125 040**

• **"Universal Mobile Telecommunications System (UMTS); Spacial channel model for Multiple Input Multiple Output (MIMO) simulations (3GPP TR 25.996 version 6.1.0 Release 6); ETSI TR 125 996" ETSI STANDARDS, EUROPEAN TELECOMMUNICATIONS STANDARDS INSTITUTE, SOPHIA-ANTIPO, FR, Bd. 3-R, Nr. V610, September 2003 (2003-09), XP014015772 ISSN: 0000-0001**

**Beschreibung**

Die Erfindung betrifft ein Verfahren zur Zuweisung von Übertragungskapazitäten bei einer Signalübertragung von einer Basisstation eines zellularen Funknetzes an eine Anzahl von mobilen Endgeräten, wobei die Basisstation gleichzeitig mehrere gerichtete Funkstrahlen aussendet. Außerdem betrifft die Erfindung eine Basisstation und ein mobiles Endgerät, mit denen ein solches Verfahren durchführbar ist.

In zellularen Mobilfunksystemen wird eine Kommunikationsverbindung zwischen einem mobilen Endgerät, im Allgemeinen auch Terminal, Mobilfunkgerät oder "User Equipment" (UE) genannt, und dem Mobilfunknetz über eine sogenannte Basisstation hergestellt. Diese Basisstation bedient die Mobilfunkteilnehmer in einem bestimmten Umkreis in einer sogenannten Zelle über einen oder mehrere Funkkanäle und stellt somit die eigentliche Funkschnittstelle zwischen dem Mobilfunknetz und dem mobilen Endgerät bereit. Sie übernimmt die Abwicklung des Funkbetriebs mit den verschiedenen mobilen Teilnehmern innerhalb ihrer Zelle und überwacht die physikalischen Funkverbindungen. Darüber hinaus überträgt sie Netz- und Statusnachrichten an die Endgeräte. Im Mobilfunkbereich wird dabei zwischen zwei Verbindungsrichtungen unterschieden. Die Abwärtsstrecke (Downlink, DL) beschreibt die Richtung von der Basisstation zum mobilen Endgerät, die Aufwärtsstrecke (Uplink, UL) die Richtung vom mobilen Endgerät zur Basisstation.

Von der Übertragungsmethode und der Übertragungsstruktur bzw. der Art der Kanalarchitektur wird entscheidend mitbestimmt, welche Übertragungsqualität mit welchem Übertragungsdurchsatz in einer Zelle erreichbar ist, z. B. wie viele Nutzer gleichzeitig mit ausreichend guter Übertragungsqualität von einer Basisstation bedient werden können. Ein sehr interessanter Ansatz für eine neue Übertragungsstruktur, welche in den letzten Jahren immer stärker erforscht und entwickelt wird, sind sogenannte Multiple-Input-/Multiple-Output-Systeme (Mehrfacheingangs-/Mehrfachausgangs-Systeme), auch kurz MIMO-Systeme genannt. In derartigen MIMO-Systemen arbeitet man sowohl an der sendenden als auch an der empfangenden Station mit Antennenfeldern (Antennenarrays). Das heißt, sowohl die Basisstation als auch die Endgeräte weisen mehrere Antennen auf. Eine Basisstation kann dabei durch entsprechende Ansteuerung der Antennen seines Antennenarrays mehrere räumlich getrennte, gerichtete Funkstrahlen (im Allgemeinen "Beams" genannt) an die zu bedienenden Endgeräte aussenden. Grundsätzlich kann mit einem solchen Antennenarray eine beliebige Anzahl von Funkstrahlen erzeugt werden, wobei jedoch die Anzahl der voneinander unabhängigen - d. h. orthogonalen - Funkstrahlen durch die Anzahl der zur Verfügung stehenden Sendeantennen begrenzt ist. Auf der Empfangsseite können in analoger Weise mittels eines Antennenarrays räumliche Filter erzeugt werden, d. h. es wird aus bestimmten Richtungen maximal empfangen und aus anderen Richtungen ist der Empfang nur gering.

Ein solches MIMO-System ist somit die komplexeste Systemarchitektur, welche letztlich als Sonderfälle die bisher bekannten Single-Input-/Multiple-Output-Systeme (Einzeleingangs-/Mehrfachausgangs-Systeme; SIMO-Systeme), Multiple-Input-/Single-Output-Systeme (Mehrfacheingangs-/Einzelausgangs-Systeme; MISO-Systeme) und die einfachen Single-Input-/Single-Output-Systeme (Einzeleingangs-/Einzelausgangs-Systeme; SISO-Systeme) als Spezialfälle umfasst, wenn einfach die Anzahl der sendenden und/oder der empfangenden Antennen auf 1 gesetzt wird. Es wurde bereits nachgewiesen, dass bei einem ausreichend hohen Signal-zu-Rausch-Verhältnis und in stark streuenden Umgebungen, beispielsweise in Städten, die normalisierte Übertragungskapazität eines MIMO-Systems die Kapazität eines SISO-Systems um einen Faktor in der Größenordnung von $\min (M_T, M_R)$ übersteigt, wobei $M_T$ die Zahl der Sendeantennen und $M_R$ die Zahl der Empfangsantennen ist.

Um bei einer Übertragung von Signalen zwischen einer Basisstation und einem Endgerät mit jeweils einem Antennenarray die dadurch gegebenen Möglichkeiten voll auszuschöpfen und die mittels des MIMO-Konzepts prinzipiell erreichbare hohe Übertragungsrate zu erzielen, sollten dem Endgerät von der Basisstation entsprechend mehrere räumlich trennbare Datenströme (z. B. auf mehreren Funkstrahlen) zugewiesen werden. Andererseits ist es zur Maximierung des Gesamtdurchsatzes innerhalb der Zelle im Allgemeinen nicht sinnvoll, einem Gerät alle oder besonders viele der ausgestrahlten Funkstrahlen zuzuweisen, da dies die Anzahl der gleichzeitig bedienbaren Nutzer in der Zelle verringert. Um bei möglichst guter Übertragungsqualität den Gesamtdurchsatz möglichst hoch zu halten, muss daher jeweils von der Basisstation entschieden werden, welche Funkstrahlen oder Kombinationen von Funkstrahlen sinnvollerweise welchen Endgeräten für eine nachfolgende Übertragung von Nutzdaten, beispielsweise Sprach- und/oder Multimedia-Daten, zugewiesen werden. Beim Aufbau eines MIMOfähigen Mobilfunknetzes muss außerdem darauf geachtet werden, dass ein Verfahren verwendet wird, mit dem in den Zellen, in denen die Basisstationen ein Antennenarray aufweisen und somit das MIMO-Verfahren unterstützen könnten, auch solche Endgeräte, die beispielsweise nur eine Antenne aufweisen, hinsichtlich ihrer Fähigkeiten optimal bedient werden.

Eine optimale Verteilung der Übertragungskapazitäten ist relativ gut möglich, wenn dem in der Basisstation angeordneten bzw. dem der betreffenden Basisstation zugeordneten Zeitplanungsprogramm (i. A. "Scheduler" genannt), welches für das Management der Übertragungskapazitäten verantwortlich ist, ausreichende Informationen über den aktuellen Zustand der einzelnen Übertragungskanäle bzw. Funkstrahlen, die sogenannten Kanalzustandsinformationen (CSI, Channel State Information), zur Verfügung stehen. In diesem Fall könnten den einzelnen Endgeräten jeweils unter Berücksichtigung der einzelnen Kanalzustände Funkstrahlen zugewiesen werden.

Prinzipiell kann auch an der Basisstation die Übertragungsqualität bzw. der Kanalzustand über die einzelnen ausgesendeten Funkstrahlen grob abgeschätzt werden. Jedoch hängt die tatsächliche Übertragungsqualität nicht nur vom Funkkanal und von der Sendeleistung bzw. anderen Parametern bei der Einstellung der Funkstrahlen von der Basisstation ab, wie z.B. den sogenannten "Beamforming-Vektoren" (Strahlformungsvektoren), sondern zu einem wesentlichen Teil auch von anderen Übertragungsbedingungen, wie z.B. von Interferenzen mit anderen Übertragungskanälen innerhalb oder außerhalb der Zelle. Daher kann letztendlich nur das empfangende Endgerät durch entsprechende Messungen ausreichend genau schätzen, wie gut die Übertragungsqualität auf einem bestimmten Funkstrahl ist, und somit eine verlässliche Kanalzustandsinformation ermitteln. Damit die Basisstation mit diesen Informationen arbeiten kann, müssten die einzelnen Endgeräte ständig die jeweils aktuellen Kanalzustandsinformationen an die Basisstation zurückmelden. Systeme, die mit von den Endgeräten zurück gelieferten Kanalzustandsinformationen arbeiten, werden im Übrigen als Closed-Loop-Systeme (geschlossene Schleifensysteme) bezeichnet, im Gegensatz zu sogenannten Open-Loop-Systemen (offene Schleifensysteme), welche keine Kanalzustandsinformationen am Sender erfordern.

Das Dokument US 2003/125040 A1 offenbart ein Verfahren zur Zuweisung von Übertragungskapazitäten bei einer Signalübertragung von einer Basisstation (BS) eines zellularen Funknetzes an eine Anzahl von mobilen Endgeräten, bei dem die Basisstation gleichzeitig mehrere gerichtete Funkstrahlen aussendet.

Ein Problem besteht jedoch gerade in der Rückübermittlung der Kanalzustandsinformationen vom jeweiligen Endgerät an die Basisstation. Zum einen ist die Bandbreite auf den Rückmelde-Kanälen (Feedback-Kanälen) beschränkt, so dass nicht beliebig viele Rückmeldungsinformationen über den Kanalzustand von den einzelnen Endgeräten an die Basisstation übermittelt werden können. Ein weiteres Problem ist die Aktualität der Informationen. So ist es häufig der Fall, dass die Kanalzustandsinformationen schon nicht mehr zutreffen, wenn die Basisstation die rückgemeldeten Kanalzustandsinformationen erhält. Dieses Problem tritt ganz besonders bei Bewegungen der Endgeräte innerhalb der Zelle auf, beispielsweise schon bei einem schnellen Gehen des Nutzers, insbesondere aber natürlich bei der Verwendung von Mobilfunkgeräten in schnell bewegten Fahrzeugen. Bei einer gleichzeitigen Bedienung mehrerer Endgeräte innerhalb einer Zelle mittels eines MIMO-Verfahrens, d. h. bei einem so genannten "Multi-User-MIMO-Downlink-Verfahren" ("Mehrnutzer-MIMO-Downlink-Verfahren"), entsteht eine weitere erhebliche Problematik dadurch, dass durch die Veränderung von Parametern für die Funkstrahlen eines Gerätes die Kanalzustände der Funkstrahlen der anderen Endgeräte mit beeinflusst werden (d.h. Interferenzbedingungen ändern sich).

Ein Übertragungskapazitäts-Management, bei dem unter Berücksichtigung aktueller, verlässlicher Kanalzustandsinformationen den einzelnen Endgeräten Funkstrahlen zugewiesen werden, ist daher bisher nicht möglich.

Es ist folglich eine Aufgabe der vorliegenden Erfindung, ein entsprechendes Verfahren zur Zuweisung von Übertragungskapazitäten für ein Multi-User-fähiges MIMO-Downlink-Übertragungsverfahren anzugeben, welches die vorgenannten Nachteile vermeidet, und eine entsprechende Basisstation und ein mobiles Endgerät anzugeben, mit dem dieses Verfahren durchführbar ist.

Diese Aufgabe wird durch ein Verfahren gemäß Patentanspruch 1 bzw. durch eine Basisstation gemäß Patentanspruch 9 und durch ein mobiles Endgerät gemäß Patentanspruch 10 gelöst.

Das erfindungsgemäße Verfahren beruht darauf, dass zunächst ein erster Kandidatensatz von Funkstrahlen definiert wird, deren wesentliche Parameter im Verhältnis zu einer Rückmeldungszeit der Endgeräte nur langsam verändert wird. Generell werden als wesentliche Parameter solche bezeichnet, welche einen Funkstrahl beispielsweise hinsichtlich Form und abgestrahler Leistung beschreiben. Unter den wesentlichen Parametern sind also insbesondere die Beamforming-Vektoren und/oder die Sendeleistungen der einzelnen Funkstrahlen zu verstehen. Als Rückmeldungszeit ist die Zeit zwischen einem Empfang von aufeinanderfolgenden Rückmeldungen eines Endgeräts an die Basisstation zu verstehen. D. h. die Rückmeldungen der einzelnen Endgeräte, welche die Kanalzustandsinformationen enthalten bzw. repräsentieren, erfolgen erheblich öfter als die Veränderung der Funkstrahlparameter.

Außerdem werden bei dem erfindungsgemäßen Verfahren den einzelnen Endgeräten von der Basisstation Informationen über die Funkstrahlen des Kandidatensatzes signalisiert. Beispielsweise werden den Endgeräten die Anzahl der Funkstrahlen und/oder Angaben zur Identifizierung der Funkstrahlen und ggf. die über die Funkstrahlen jeweils ausgesendete Sendeleistung signalisiert, sofern diese Daten nicht ohnehin in einer Norm oder dgl. festgelegt und daher den Endgeräten bekannt sind. Auch diese Signalisierung erfolgt auf einer Langzeitbasis, d. h. es werden in der Regel nur dann, wenn die Funkstrahlparameter geändert werden, den Endgeräten entsprechende neue Informationen über die Funkstrahlen signalisiert.

Die Anzahl von Endgeräten oder Funkstrahlen kann im Rahmen der Anmeldung jede natürliche Zahl sein, wobei die Erfindung insbesondere für eine Anzahl von mindestens 2 Anwendung findet.

Hierbei kann die Anzahl von Endgeräten gleich, kleiner oder größer der Anzahl von Funkstrahlen sein. Im ersten Fall ist für jedes Endgerät ein Funkstrahl vorgesehen. Im zweiten Fall wird ein Endgerät mittels zumindest zwei Funkstrahlen versorgt, im dritten Fall werden zumindest zwei Endgeräte von einem Funkstrahl versorgt.

Weiterhin werden bei dem erfindungsgemäßen Verfahren von der Basisstation in im Verhältnis zur Veränderungszeit der Funkstrahlparameter kurzen zeitlichen Abständen Pilotsignale über die betreffenden Funkstrahlen des Kandidatensatzes ausgesendet. Die Endgeräte ermitteln dann jeweils mit Hilfe der empfangenen Pilotsignale für jeden empfangenen Funkstrahl einen SINR-Wert (SINR = Signal to Interference plus Noise Ratio; Signal-zu-Interferenz-plus-Rauschleistungs-Verhältnis) und ermitteln wiederum auf Basis der betreffenden SINR-Werte für jeden empfangenen Funkstrahl einen Rückmeldewert, den sie schließlich an die Basisstation übermitteln. Unter Verwendung der Rückmeldewerte und ggf. weiterer Parameter werden dann den verschiedenen Endgeräten geeignete Kombinationen von Funkstrahlen für eine nachfolgende Signalübertragung von der Basisstation zugewiesen. Unter einer geeigneten "Kombination von Funkstrahlen" ist hierbei zu verstehen, dass einem bestimmten Endgerät ggf. auch nur ein einzelner Funkstrahl oder sogar bei einer nachfolgenden Signalübertragung gar kein Funkstrahl zugewiesen wird. Die weiteren Parameter, die bei der Zuweisung der Funkstrahlkombinationen zu den Endgeräten neben den Rückmeldewerten berücksichtigt werden können, hängen u. a. vom vorgesehenen Ziel, wie z.B. maximaler Durchsatz und/oder optimale Übertragung zu bestimmten Geräten, von Prioritätsregelungen für die Bedienung der verschiedene Endgeräte oder auch von den Empfangsmöglichkeiten der betreffenden Endgeräte ab, beispielsweise davon, ob das jeweilige Endgerät überhaupt ein Antennenarray oder nur eine einzelne Antenne aufweist.

Bei dem erfindungsgemäßen Verfahren werden folglich auf einer "Langzeitskala" die Beamforming-Vektoren und/oder Sendeleistungen bzw. gegebenenfalls weitere Parameter der Funkstrahlen variiert, wogegen auf einer "Kurzzeitskala", d. h. in relativ kurzen zeitlichen Abständen, wiederholt die SINR-Werte abgeschätzt und auf Basis dieser SINR-Werte bzw. darauf basierender Rückmeldewerte die einzelnen Funkstrahlkombinationen den Endgeräten zugewiesen werden. Diese Kombination von "Langzeit-Beamforming" und "schnellem Scheduling" sorgt dafür, dass die SINR-Werte verlässlich sind und somit auch die Zuweisung der Übertragungskapazitäten für die einzelnen Endgeräte auf verlässlicher Basis optimiert werden kann. Die Erfindung schafft somit die Möglichkeit einer sehr robusten Multi-User-MIMO-Übertragung, bei der mit relativ wenig Signalisierungsaufwand eine optimale Nutzung der zur Verfügung stehenden Übertragungskapazitäten erfolgt.

Die abhängigen Ansprüche sowie die weitere Beschreibung enthalten jeweils besonders vorteilhafte Ausführungen und Weiterbildungen der Erfindung.

Die Pilotsignale werden vorzugsweise so häufig ausgesendet, dass auch sich schnell bewegende Teilnehmer den aktuellen Kanalzustand der Funkstrahlen sicher abschätzen können. Dies hängt von der sogenannten "Kohärenzzeit" des Funkkanals ab. Als Kohärenzzeit ist die Zeit zu verstehen, in der sich die Übertragungsbedingungen nicht wesentlich verändern. Daher sollten die Pilotsignale bevorzugt in kürzeren Abständen als die Kohärenzzeit ausgesendet werden. Dementsprechend werden ebenso häufig von den Endgeräten Rückmeldewerte an die Basisstation gesendet. Besonders bevorzugt erfolgt die Aussendung der Pilotsignale und Übermittlung von Rückmeldewerten in festen Zeitabständen, z. B. vor jedem TTI (Transmission Time Interväl; Übertragungszeit-Intervall). Bei einem TTI handelt es sich um die kleinste Zeiteinheit, in der Nutzern die Übertragungskanäle zugewiesen werden können. Auf der anderen Seite sollten die Parameter der Funkstrahlen des Kandidatensatzes vorzugsweise nur langsam im Verhältnis zur Kohärenzzeit verändert werden.

Bei einer ganz besonders bevorzugten Variante des erfindungsgemäßen Verfahrens wird aus den zum ersten Kandidatensatz gehörenden Funkstrahlen für jedes der Endgeräte zunächst ein zweiter, nutzerspezifischer Kandidatensatz von Funkstrahlen ausgewählt, welcher den betreffenden Endgeräten jeweils signalisiert wird. Es reicht dann z. B. aus, wenn die Endgeräte mit Hilfe der empfangenen Pilotsignale nur noch für die Funkstrahlen des ihnen zugeordneten, nutzerspezifischen Kandidatensatzes jeweils einen SINR-Wert ermitteln und einen auf Basis des jeweiligen SINR-Wertes ermittelten Rückmeldewert an die Basisstation übermitteln. Auf diese Weise kann die für die Rückmeldung benötigte Übertragungskapazität drastisch reduziert werden, da unnötige Rückmeldungen vermieden werden. Dies ist insofern besonders sinnvoll, da es im Allgemeinen ohnehin klar ist, dass eine Übermittlung von Funkstrahlen in einen bestimmten Winkelbereich von der Basisstation aus nur bestimmte Endgeräte erreichen kann. Daher ist es ausreichend, wenn die betreffenden Endgeräte auch nur für die für ihren Bereich bzw. in ihre Richtung ausgestrahlten Funkstrahlen versuchen, die SINR-Werte abzuschätzen und entsprechende Rückmeldungen an die Basisstation übermitteln. Dabei müssen jedoch die nutzerspezifischen Kandidatensätze von Funkstrahlen nicht zwingend unterschiedliche Funkstrahlen aufweisen. In der Regel gehört in der Realität eine große Anzahl von Funkstrahlen zu mehreren unterschiedlichen nutzerspezifischen Kandidatensätzen.

Zu den Informationen über die einzelnen von der Basisstation an die Endgeräte übermittelten Funkstrahlen des Kandidatensatzes gehören sinnvollerweise die Anzahl der Funkstrahlen des Kandidatensatzes und ggf. Informationen zur Identifizierung, welche Funkstrahlen zu welchem nutzerspezifischen Kandidatensatz gehören. Sofern die Sendeleistungen nicht ohnehin innerhalb einer Übertragungsnorm fest spezifiziert sind, kann auch diese jeweils den einzelnen Endgeräten vorab mitgeteilt werden. Sofern jede Basisstation eine eigene Pilotstruktur, d. h. unterschiedliche Pilotsignale bzw. Spreizsequenzen verwendet, werden vorzugsweise an die Endgeräte auch Informationen über die Pilotstruktur der nachfolgend über die Funkstrahlen des Kandidatensatzes ausgesendeten Pilotsignale übermittelt. Dies ist natürlich dann nicht nötig, wenn z. B. in einem Standard alle Piloten der Basisstationen exakt vorab definiert und daher den einzelnen Endgeräten bekannt sind.

Die Informationen über die zum Kandidatensatz gehörigen Funkstrahlen, d. h. die Anzahl der Funkstrahlen und/oder die Informationen über die Identifizierung der Funkstrahlen und/oder die Sendeleistung auf den einzelnen Funkstrahlen und/oder die Pilotstruktur, werden vorzugsweise über einen allgemeinen Informationskanal, beispielsweise den sogenannten Broadcast Channel (BCH; Rundfunkkanal) von der Basisstation an alle Endgeräte gemeinsam übermittelt, um so möglichst wenig Übertragungskapazität für diese Signalisierung zu verwenden.

Für eine Auswahl eines ersten Kandidatensatzes gibt es verschiedene Möglichkeiten. Einige Verfahren hierzu werden später noch genauer erläutert. Bei einer sehr einfach durchzuführenden und daher bevorzugten Variante erfolgt die Auswahl des ersten Kandidatensatzes auf Basis eines Funkstrahlgitters, üblicherweise auch "Grid of Beam" (GOB) genannt, welches eine Anzahl von Funkstrahlen umfasst, die einen definierten Versorgungsbereich der Basisstation, beispielsweise einen Vollkreis oder einen Sektor um die Basisstation, vollflächig abdeckt. Vorzugsweise überlappen sich hierbei die Funkstrahlen. Häufig weist ein solches Funkstrahlgitter orthogonale Funkstrahlen auf. Dies muss aber nicht zwangsläufig so sein.

Als Rückmeldewert wird von den Endgeräten jeweils auf Basis des betreffenden SINR-Werts vorzugsweise ein sogenannter CQI-Wert (CQI = Channel Quality Indicator; Kanalqualitätsindikator) ermittelt. Der Vorteil dieses Verfahrens besteht darin, dass im CQI-Wert die Qualität des empfangenden Mobilfunkgeräts impliziert ist. Grundsätzlich kann auch der SINR-Wert in digitalisierter Form als Rückmeldewert übermittelt werden. In diesem Fall müsste jedoch die Basisstation die Qualität der mobilen Endgeräte kennen, um entsprechend eine optimale Funkstrahlzuweisung durchführen zu können. Der CQI-Wert hat außerdem den Vorteil, dass er bereits das gewünschte Modulations- und Kodierungsschema (MCS = Modulation and Coding Scheme) enthält, mit dem bei einem bestimmten SINR-Wert für das betreffende Endgerät die optimalen Übertragungsbedingungen erreicht werden können. Dabei kann je nach Wahl des CQI-Werts entweder ein großer Durchsatz erreicht werden und/oder eine geringste Fehlerrate oder eine oder mehrere andere Rahmenbedingungen optimiert werden. Somit ist es möglich, dass die Basisstation anhand des Rückmeldewerts nicht nur die Zuweisung der Funkstrahlen zu den einzelnen Endgeräten vornimmt, sondern auch gleichzeitig ein geeignetes Modulations- und Kodierungsschema für die einzelnen Funkstrahlen zu den verschiedenen Endgeräten festlegt, um so die optimale Übertragung zu gewährleisten.

Eine entsprechende Basisstation benötigt neben der üblichen Ausstattung, die eine solche Basisstation in der Regel aufweist, Mittel zur Zuweisung von Übertragungskapazitäten für eine gleichzeitige Signalübertragung an eine Anzahl von mobilen Endgeräten über mehrere gerichtete Funkstrahlen, welche folgende Komponenten umfassen:

- eine Funkstrahl-Konfigurationseinrichtung, um einen ersten Kandidatensatz von Funkstrahlen festzulegen, wobei die wesentlichen Parameter der Funkstrahlen im Verhältnis zu einer Rückmeldungszeit der Endgeräte nur langsam verändert werden,
- eine Kandidatensatz-Signalisierungseinrichtung, um den Endgeräten Informationen über die Funkstrahlen des Kandidatensatzes zu signalisieren,
- eine Pilotsignal-Versendungseinrichtung, um in im Verhältnis zur Veränderungszeit der Funkstrahlen kurzen zeitlichen Abständen Pilotsignale über die Funkstrahlen des Kandidatensatzes an die Endgeräte auszusenden,
- eine Rückmeldungs-Empfangseinrichtung, um von den verschiedenen Endgeräten Rückmeldewerte zu empfangen, welche auf Basis von jeweils mit Hilfe der empfangenen Pilotsignale für jeden der empfangenen Funkstrahlen ermittelten SINR-Werte ermittelt wurden
- eine Funkstrahl-Zuweisungseinrichtung, um unter Verwendung der Rückmeldewerte und ggf. weiterer Parameter den verschiedenen Endgeräten geeignete Kombinationen von Funkstrahlen für eine nachfolgende Signalübertragung zuzuweisen.

Es sei nochmals bemerkt, dass die wesentlichen Parameter - für das Verfahren wie für die Basisstation oder/und das mobile Endgerät in Strahlform und Leistung bestehen können. Unter Strahlform wird hierbei der Betrag und die Phase in allen räumlichen Richtungen verstanden. Bei bereits geschilderten Ausführungsformen der Erfindung wurden beispielsweise Parameter wie Modulation und Codierung für jeden Funkstrahl kurzfristig adaptiert. In weiteren Ausführungsformen ist es auch vorgesehen, einen oder mehrere dieser Parameter langfristig zu adaptieren. In diesem Falle stellen auch diese Parameter wesentliche Parameter dar.

Mittels einer geeigneten Signalisierungseinrichtung werden die Nutzer dann vor der eigentlichen Nutzsignalübertragung in kurzen zeitlichen Abständen über die zugewiesenen Funkstrahlen informiert.

Die Basisstation benötigt folglich zur erfindungsgemäßen Optimierung der Gesamtsystem-Performance einerseits eine Funkstrahl-Konfigurationseinrichtung, welche mit einem Langzeit-Anpassungsalgorithmus arbeitet, und andererseits einen sehr schnellen "Scheduler", welcher über die in kurzen zeitlichen Abständen ausgesendeten Pilotsignale und auf Basis der dadurch ausgelösten Rückmeldungswerten eine schnelle, sich ständig ändernde Zuweisung der Funkstrahlen des nur langsam veränderten Satz von Funkstrahlen zu den einzelnen Endgeräten vornimmt.

Auf der Empfängerseite wird bevorzugt, insbesondere bei der Definition von nutzerspezifischen Kandidatensätzen von Funkstrahlen, ein mobiles Endgerät verwendet, welches eine Empfangseinrichtung zum Empfang von verschiedenen von einer Basisstation ausgesendeten Funkstrahlen und zum Empfang von Informationen über einen dem Endgerät zugeordneten Kandidatensatz von Funkstrahlen aufweist. Weiterhin muss dieses mobile Endgerät eine Funkstrahlen-Identifizierungseinrichtung aufweisen, um einen empfangenen Funkstrahl als zu dem Kandidatensatz zugehörig zu identifizieren. Außerdem wird eine Funkstrahlqualität-Ermittlungseinrichtung benötigt, um für die zum Kandidatensatz gehörigen Funkstrahlen auf Basis von Pilotsignalen, die das Endgerät jeweils über die verschiedenen Funkstrahlen von der Basisstation empfangen hat, einen SINR-Wert zu ermitteln. Schließlich muss das Endgerät eine Rückmeldungseinrichtung aufweisen, um nur die für die zum Kandidatensatz des betreffenden Endgeräts gehörigen Funkstrahlen auf Basis der SINR-Werte ermittelten Rückmeldungswerte an die Basisstation zu verwenden.

Es ist klar, dass insbesondere auch die erfindungsgemäße Basisstation und das mobile Endgerät analog zu den abhängigen Ansprüchen und der Beschreibung des erfindungsgemäßen Verfahren weitergebildet sein können.

Die Erfindung wird im Folgenden unter Hinweis auf die beigefügten Figuren anhand von Ausführungsbeispielen noch einmal näher erläutert. Es zeigen:

Figur 1 eine Darstellung der von der Basisstation bei einer allgemeinen Multi-User-MIMO-Downlink-Übertragung an drei Endgeräte ausgesendeten Signalvektoren und der von den Endgeräten empfangenen Signalvektoren,

Figur 2 eine Illustration des Multi-User-MIMO-Downlink-Problems für drei aktive Teilnehmer in einer Zelle,

Figur 3 eine schematische Darstellung einer möglichen Funkstrahlzuweisung bei sechs Teilnehmern in einer Zelle,

Figur 4 ein Flussdiagramm zur Verdeutlichung einer Ausführungsform des erfindungsgemäßen Verfahrens,

Figur 5 eine schematische Darstellung eines Funkstrahlgitters (GOB), welches einen 120˚-Sektor um eine Basisstation abdeckt,

Figur 6 eine Darstellung der von der Basisstation bei einer erfindungsgemäßen Multi-User-MIMO-Downlink-Übertragung an drei Endgeräte ausgesendeten Signalvektoren und der von den Endgeräten empfangenen Signalvektoren,

Figur 7 ein Diagramm zur Zuordnung des SINR-Werts zu verschiedenen MCS-Stufen bei einer Optimierung der BandbreitenEffizienz,

Figur 8 eine schematische Darstellung eines Ausführungsbeispiels einer erfindungsgemäßen Basisstation,

Figur 9 eine schematische Darstellung eines Ausführungsbeispiels eines erfindungsgemäßen mobilen Endgeräts.

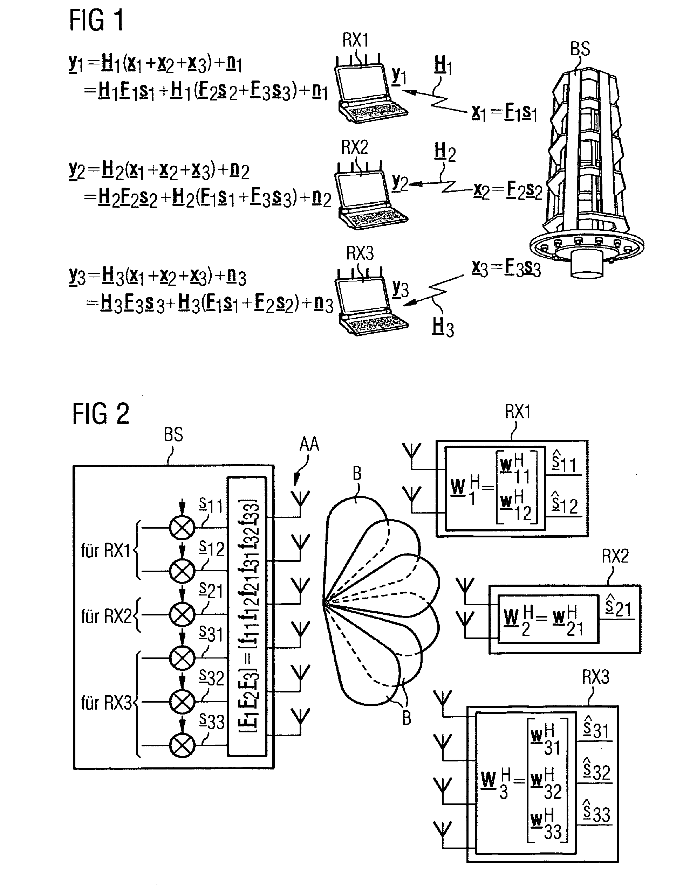

Anhand der Figuren 1 und 2 lässt sich verdeutlichen, warum mit dem erfindungsgemäßen Verfahren die Probleme der Ressourcenverwaltung in einem Multi-User-MIMO-Downlink-Übertragungssystem zu einem Großteil gelöst werden können:

Geht man vereinfacht von einem Kanal mit sogenannten "Flat Fading"(Flachschwund)-Ausbreitungsbedingungen aus, d. h. von einem Kanal, dessen Übertragungseigenschaften sich nicht wesentlich innerhalb der Übertragungsbandbreite des Kanals ändern, so kann ein MIMO-System, welches $M_{Rk}$ Empfangs- und $M_T$ Sendeantennen verwendet, durch die komplexe $M_{Rk} \times M_T$ Kanalmatrix $\underline{H}_k(t)$ beschrieben werden. Dabei bezeichnet der Index k den k-ten Nutzer bzw. das k-te Endgerät. Weiterhin können die Symbole, welche zur Zeit t von den $M_T$ Sendeantennen ausgesendet werden, in einem $M_T \times 1$ Spaltenvektor $\underline{x}_k(t)$ kombiniert werden und die zur Zeit t empfangenen Abtastwerte (Samples) durch den $M_{Rk} \times 1$ Spaltenvektor $\underline{x}_k(t)$ zusammengefasst werden. In gleicher Weise können die Rausch-Abtastwerte (welche durch thermisches Rauschen und Inter-Zell-Interferenz, d. h. Interferenz zwischen benachbarten Zellen, auftreten) in dem $M_{Rk} \times 1$ Rauschvektor $\underline{n}_k(t)$ zusammengefasst werden. Eine MIMO-Downlink-Übertragung für den k-ten Nutzer kann daher wie folgt beschrieben werden:

$$\underline{y}_k = \underline{H}_k \, \underline{x}_k + \underline{n}_k \quad \text{mit} \quad \begin{aligned} \underline{x}_k &= [\underline{x}_{k1}, \underline{x}_{k2}, \ldots, \underline{x}_{kM_T}]^T \\ \underline{y}_k &= [\underline{y}_{k1}, \underline{y}_{k2}, \ldots, \underline{y}_{kM_{Rk}}]^T \\ \underline{n}_k &= [\underline{n}_{k1}, \underline{n}_{k2}, \ldots, \underline{n}_{kM_{Rk}}]^T \end{aligned} \quad \text{und} \quad \underline{R}_{n_k n_k} = E\left\{\underline{n}_k \underline{n}_k^H\right\} \qquad (1)$$

Hierbei wurde der Einfachheit halber die Zeitabhängigkeit zunächst vernachlässigt. Es ist jedoch grundsätzlich zu beachten, dass die Kanäle eine zeitveränderliche Natur aufweisen. Außerdem wurde eine Rausch-Kovarianz-Matrix (noise covariance matrice) $\underline{R}_{n_k n_k}$ eingeführt. Nimmt man Ergodizität an, kann diese Kovarianz-Matrix durch Zeitmittlung geschätzt werden. Hierbei ist zu beachten, dass der Rauschterm Interzell-Interferenzen einschließt und daher in der Regel räumlich gerichtet ist (d. h. $\underline{R}_{n_k n_k} \neq \sigma^2 I$).

In den meisten Fällen ist es vorteilhaft, innerhalb eines Symbolintervalls nicht $M_T$-unabhängige sondern nur eine reduzierte Anzahl $Q_k \leq \min(M_T, M_{Rk})$ komplexe Symbole zu verwenden. Da jedoch möglichst sämtliche Sendeantennen genutzt werden sollten, um vom Antennengewinn des Antennenarrays zu profitieren, werden die übersendeten Symbole, welche den $Q_k \times 1$ Spaltenvektor $\underline{s}_k$ formen, auf die $M_T$ Sendeantennen linear abgebildet, was häufig als sogenanntes "lineares Precoding" (lineare Vorfilterung) bezeichnet wird. Man erhält dann

$$\underline{y}_k = \underline{H}_k \underline{F}_k \underline{s}_k + \underline{n}_k = \underline{G}_{kk} \underline{s}_k + \underline{n}_k = \underline{H}_k \sum_{\theta=1}^{Q_k} \underline{f}_{k\theta} \underline{s}_{k\theta} + \underline{n}_k = \sum_{\theta=1}^{Q_k} \underline{g}_{kk\theta} \underline{s}_{k\theta} + \underline{n}_k \qquad (2)$$

mit

$$\begin{cases} \underline{F}_k = [\underline{f}_{k1}\, \underline{f}_{k2} \cdots \underline{f}_{kQ_k}] = M_T \times Q_k & \text{und} \quad \|\underline{f}_{k\theta}\| = 1 \quad \forall \theta = 1 \ldots Q_k \\ \underline{s}_k = [\underline{s}_{k1}, \underline{s}_{k2}, \ldots, \underline{s}_{kQ_k}]^\mathsf{T} & \text{und} \quad \underline{R}_{s_k s_k} = E\{\underline{s}_k \underline{s}_k^\mathsf{H}\} = \mathrm{diag}(P_{k1}, \ldots, P_{kQ_k}) \end{cases} \qquad (3)$$

Die Matrix $\underline{F}_k$ wird hierbei als sogenannte "Beamforming-Matrix" (Strahlformungsmatrix) bezeichnet und besteht aus den "Beamforming-Vektoren" $\underline{f}_{k0}$. Die Beamforming-Vektoren enthalten somit die Parameter, welche bestimmen, in welche Richtung und in welcher Form die Funkstrahlen von der Basisstation abgestrahlt werden.

Im Folgenden wird davon ausgegangen, dass im Allgemeinen mit den verschiedenen Datenströmen unterschiedliche Leistungen $P_{k\theta} = E\{|\underline{s}_{k\theta}|^2\}$ verbunden sind. Da bei diesen verfahren gleichzeitig mit mehreren Funkstrahlen gesendet wird, welche jeweils durch ihre Beamforming-Vektoren repräsentiert werden, wird diese Art von Beamforming auch als "generalized Beamforming" (verallgemeinerte Strahlformung) bezeichnet.

Für den Spezialfall $Q_k = 1$, d. h. für die Verwendung nur eines Funkstrahls für einen einzelnen Nutzer, ist dieses Schema allgemein bekannt. Im vorliegenden Fall geht es jedoch um räumliche Multiplex-Verfahren, bei denen die $Q_k$ parallelen Datenströme genutzt werden, um eine höhere Durchsatzrate zu erreichen, anstatt nur eine verbesserte Trennung bzw. reine Antennenarray- bzw. Beamforming-Verstärkung zu erzielen. Dabei wird vorausgesetzt, dass die $Q_k$ Teil-Datenströme bzw. Funkstrahlen individuell codiert werden oder dass zumindest eine Kanalqualitätsermittlung für jeden individuellen Funkstrahl für das Übertragungskapazitäts-Management, für die Planungsentscheidung und/oder für eine Anpassung von Modulations- und Kodierungsschemata von Wert sind.

Die obigen Gleichungen (2) und (3) beziehen sich auf eine individuelle Funkverbindung zwischen einer Basisstation und einem bestimmten, dem k-ten, Nutzer. Unter realen Bedingungen werden jedoch bei einem Multi-User-MIMO-System von der Basisstation gleichzeitig mehrere Funkstrahlen an verschiedenste Nutzer ausgesendet, was üblicherweise als SDMA (SDMA = Space Division Multiple Access; räumlich getrennter Vielfachzugriff) bezeichnet wird. Hierbei werden verschiedene Benutzer zusätzlich zu TDMA (Space Division Multiple Access; zeitlich getrennter Vielfachzugriff), FDMA (Frequency Division Multiple Access; Frequenz-getrennter Vielfachzugriff) und/oder CDMA (Code Division Multiple Access; Code-getrennter Vielfachzugriff) rein räumlich durch Ausprägen der verschiedenen Beams getrennt. Außerdem kommt es bei einem Multi-User-MIMO-System - wie die Definition "MIMO" bereits sagt- vor, dass mehr als ein Funkstrahl für einen Nutzer vorgesehen ist. Solche Verfahren, bei denen räumlich getrennt mehrere Datenströme gleichzeitig auf der gleichen Frequenz und mit dem gleichen Code zu einem Benutzer übertragen werden, werden auch als SMUX-Verfahren (Spatial Multiplexing; räumliches Multiplexen) bezeichnet.

Das vom Endgerät k empfangene Signal kann daher allgemein wie folgt beschrieben werden:

$$\underline{y}_k = \underline{H}_k \sum_{\kappa=1}^{K} \underline{x}_\kappa + \underline{n}_k = \underline{H}_k \sum_{\kappa=1}^{K} \underline{F}_\kappa \underline{s}_\kappa + \underline{n}_k = \underline{H}_k \underline{F}_k \underline{s}_k + \underline{H}_k \sum_{\substack{\kappa=1 \\ \kappa \neq k}}^{K} \underline{F}_\kappa \underline{s}_\kappa + \underline{n}_k \qquad (4)$$

In Figur 1 ist dieser Fall für drei Endgeräte RX1, RX2, RX3 dargestellt, welche von einer Basisstation BS bedient werden. In dieser Figur sind auch jeweils die Sendesymbolvektoren $\underline{x}_1$, $\underline{x}_2$, $\underline{x}_3$ sowie die Empfangsabtastwert-Vektoren $\underline{y}_1$, $\underline{y}_2$, $\underline{y}_3$ für die drei Endgeräte RX1, RX2, RX3 angegeben, wie sie sich aus der Gleichung (4) ergeben.

Zwar passieren die an die verschiedenen Nutzer übermittelten Signale den gleichen MIMO-Kanal $\underline{H}_k$. Jedoch sind im Allgemeinen die Antennengewichtungsfaktoren, d. h. die Beamforming-Vektoren $\underline{f}_{\kappa\theta}$ (mit $\theta = 1 \ldots Q_\kappa$), die für die

verschiedenen Nutzer verwendet werden, unterschiedlich, was letztlich zu unterschiedlichen effektiven MIMO-Kanälen $\underline{G}_{k\kappa} = \underline{H}_k \underline{F}_\kappa$ führt. Folglich kann das k-te Endgerät zwar seinen eigenen Kanal $\underline{H}_k$ oder sogar den effektiven Kanal $\underline{G}_{kk}$ einschließlich seines eigenen Sende-Beamforming-Vektors messen. Die Kenntnis der Sende-Beamforming-Matrizen $\underline{F}_\kappa$ für die anderen Nutzer $\kappa \neq k$ ist im Allgemeinen jedoch nicht gegeben, da dies eine exzessive Vorwärts-Signalisierung von der Basisstation zu den einzelnen Nutzern erfordern würde.

Für einen einzelnen Funkstrahl q für einen bestimmten Nutzer k (d. h. für den Funkstrahl, über den die Datensymbole $\underline{S}_{kq}$ übertragen werden) gilt

$$\underline{y}_k = \underbrace{\underline{H}_k \underline{f}_{kq} \underline{s}_{kq}}_{I} + \underbrace{\sum_{\substack{\theta=1 \\ \theta \neq q}}^{Q_k} \underline{H}_k \underline{f}_{k\theta} \underline{s}_{k\theta}}_{II} + \underbrace{\sum_{\substack{\kappa=1 \\ \kappa \neq k}}^{K} \sum_{\theta=1}^{Q_\kappa} \underline{H}_k \underline{f}_{\kappa\theta} \underline{s}_{\kappa\theta}}_{III} + \underbrace{\underline{n}_k}_{IV} \qquad (5)$$

Der erste Term I ist das eigentliche Signal von Interesse. Der zweite Summand II gibt die sogenannte "Selbstinterferenz" an, die dadurch entsteht, dass an den gleichen Nutzer mehrere Funkstrahlen übertragen werden. Der dritte Summand III gibt die sogenannte "Intrazell-Interferenz" an, die dadurch entsteht, dass Funkstrahlen gleichzeitig auch an andere Nutzer in dieser Zelle ausgesendet werden. Der letzte Summand IV enthält das allgemeine Rauschen einschließlich so genannter "Interzell-Interferenzen" durch Funkstrahlen aus benachbarten Zellen.

Für einen optimalen Empfang müssen die verschiedenen Funkstrahlen für einen Nutzer gemeinsam behandelt werden. Daher ist Gleichung (5) nicht uneingeschränkt verwendbar. Sie zeigt aber dennoch, dass bei linearen Empfangsbedingungen das für den Nutzer k verfügbare Signal in einem bestimmten Funkstrahl q eine Superposition des interessierenden Signals, des Selbstinterferenz-Anteils, des Intrazell-Interferenz-Anteils sowie des "Rausch-plus-Interzell-Interferenz-Anteils" ist.

Auf Empfängerseite werden bei Verwendung eines linearen Empfängers die übermittelten Symbole durch geeignete Gewichtung der einzelnen Abtastwerte im Vektor $\underline{y}_k$ abgeschätzt. Dies kann als Beamforming auf der Empfängerseite interpretiert werden. Die Empfänger-Beamforming-Matrix für den k-ten Nutzer kann dabei als $\underline{W}_k$ bezeichnet werden. In diesem Fall ist der Schätzwert für den übermittelten Signalvektor $\underline{s}_k$ gegeben durch:

$$\hat{\underline{s}}_k = \underline{W}_k^H \underline{y}_k = \underline{W}_k^H \left( \underline{H}_k \sum_{\kappa=1}^{K} \underline{F}_\kappa \underline{s}_\kappa + \underline{n}_k \right) = \underline{W}_k^H \underline{H}_k \underline{F}_k \underline{s}_k + \underline{W}_k^H \underline{H}_k \sum_{\substack{\kappa=1 \\ \kappa \neq k}}^{K} \underline{F}_\kappa \underline{s}_\kappa + \underline{W}_k^H \underline{n}_k \qquad (6)$$

$$\text{with} \quad \underline{W}_k = [\underline{w}_{k1}\ \underline{w}_{k2} \cdots \underline{w}_{kQ_k}] = M_{Rk} \times Q_k \text{ Matrix}$$

Ein solches Empfangs-Beamforming wird üblicherweise auch als räumliche Filterung (Spatial Filtering) bezeichnet. Verschiedenste Verfahren einschließlich des so genannten "Zero-Forcing" (ZF; Null(-Interferenz)-Entzerrung) oder des "Minimum Mean Square Error" (MMSE; Minimaler Mittlerer Quadratischer Fehler) sind im Rahmen der Erfindung anwendbar. Alle diese Verfahren sind dem Fachmann bekannt, so dass hierauf nicht weiter eingegangen werden muss.

Für einen einzelnen Funkstrahl q für einen Nutzer k kann wieder analog zu Gleichung (5) geschrieben werden

$$\hat{\underline{s}}_{kq} = \underbrace{\underline{w}_{kq}^H \underline{H}_k \underline{f}_{kq} \underline{s}_{kq}}_{I'} + \underbrace{\sum_{\substack{\theta=1 \\ \theta \neq q}}^{Q_k} \underline{w}_{kq}^H \underline{H}_k \underline{f}_{k\theta} \underline{s}_{k\theta}}_{II'} + \underbrace{\sum_{\substack{\kappa=1 \\ \kappa \neq k}}^{K} \sum_{\theta=1}^{Q_\kappa} \underline{w}_{kq}^H \underline{H}_k \underline{f}_{\kappa\theta} \underline{s}_{\kappa\theta}}_{III'} + \underbrace{\underline{w}_{kq}^H \underline{n}_k}_{IV'} \qquad (7)$$

Auch hier ist wieder der erste Term I das eigentliche Signal von Interesse, der zweite Summand II gibt die Selbstinterferenz an, der dritte Summand III die Intrazell-Interferenz und der letzte Summand IV das allgemeine Rauschen einschließlich der Interzell-Interferenzen.

Diese Multi-User-MIMO-Downlink-Situation ist in Figur 2 noch einmal für drei aktive Nutzer dargestellt. In diesem speziellen Beispiel wurde entschieden, dass die Basisstation BS zwei Funkstrahlen ($Q_1=2$) an das Endgerät RX1 sendet, nur einen Funkstrahl ($Q_2=1$) an das Endgerät RX2 und drei Funkstrahlen ($Q_3 = 3$) an das Endgerät RX3. Daher ist die Anzahl der gleichzeitig gesendeten Funkstrahlen $\Sigma Q_\kappa = 6$. Diese werden mit Hilfe von sechs Beamforming-Vektoren auf die $M_T = 8$ Sendeantennen abgebildet. Jeder der Empfänger nutzt einen geeigneten räumlichen Filter, d. h. entsprechende Beamforming-Matrizen bzw. -Vektoren, um die interessierenden Signale zu extrahieren und abzuschätzen und gleichzeitig Interferenzen von anderen Funkstrahlen sowie von Interzell-Interferenzen (welche in der Figur nicht dargestellt sind) zu unterdrücken.

Auf Empfängerseite ergibt sich somit ein Signal-zu-Interferenz-plus-Rausch-Verhältnis (SINR; Signal to Interference plus Noise Ratio) des Funkstrahls kq (d. h. des q-ten Funkstrahls detektiert vom k-ten Nutzer) gemäß:

$$\text{SINR}_{kq} = \frac{P_{signal,kq}}{P_{self,kq} + P_{intra,kq} + P_{noise+inter,kq}} \qquad (8)$$

wobei gilt:

$$P_{signal,kq} = P_{kq} \, | \, \underline{w}_{kq}^{H} \, \underline{H}_{k} \, \underline{f}_{kq} \, |^{2}$$

$$P_{self,kq} = \sum_{\substack{\theta=1 \\ \theta \neq q}}^{Q_{k}} P_{k\theta} \, | \, \underline{w}_{kq}^{H} \, \underline{H}_{k} \, \underline{f}_{k\theta} \, |^{2}$$

$$P_{intra,kq} = \sum_{\substack{\kappa=1 \\ \kappa \neq k}}^{K} \sum_{\theta=1}^{Q_{\kappa}} P_{\kappa\theta} \, | \, \underline{w}_{kq}^{H} \, \underline{H}_{k} \, \underline{f}_{\kappa\theta} \, |^{2}$$

$$P_{noise+inter,kq} = \underline{w}_{kq}^{H} \, \underline{R}_{n_k n_k} \, \underline{w}_{kq}$$

$$(9)$$

Wie aus Gleichung (8) zu ersehen ist, enthält der Teiler als Summanden sowohl den Rausch-plus-Interzell-Interferenz-Anteil als auch den Selbstinterferenz-Anteil und den Intrazell-Interferenz-Anteil aufgrund von Funkstrahlen, welche an andere Nutzer innerhalb der Zelle ausgesendet werden. Die Gleichungen (8) und (9) zeigen dabei deutlich, dass der von einem bestimmten Endgerät für einen bestimmten Funkstrahl gemessene SINR-Wert nicht nur von der Leistung $P_{kq}$, mit der der interessierende Datenstrom ausgesendet wird, und von der unvermeidbaren Rausch-plus-Interzell-Interfererenz-Kovarianz-Matrix $\underline{R}_{n_k n_k}$ und der MIMO-Kanalmatrix $\underline{H}_{k}$ abhängt. In den SINR-Wert gehen auch die Signalleistungen, welche für andere Funkstrahlen und/oder andere Nutzer gewählt wurden, sowie die Beamforming-Matrizen $\underline{F}_{\kappa}$ für alle anderen Nutzer ein.

Es ist folglich ein nicht triviales Problem, der Basisstation eine verlässliche aktuelle Schätzung des SINR-Werts und somit des Kanalzustands der einzelnen Funkstrahlen zu den verschiedenen Endgeräten zur Verfügung zu stellen, damit diese optimal die Zuweisung der Sende-Ressourcen vornehmen kann. Wann immer nur einer der Beamforming-Vektoren $\underline{f}_{k\theta}$ und/oder einer der für diese einzelnen Funkstrahlen verwendeten Leistungswerte $P_{k\theta}$ geändert wird, ist ein zuvor gemessener bzw. geschätzter SINR-Wert zum Zeitpunkt der späteren Übertragung nicht mehr gültig. Hierbei ist zu beachten, dass zusätzlich die Wahl der Empfangs-Beamforming-Matrix, d. h. der räumlichen Filterung gemäß Gleichungen (8) und (9), grundsätzlich auch von den Sende-Beamforming-Vektoren und den einzelnen Funkstrahlleistungen abhängt. Dies macht die Abhängigkeit der einzelnen, geschätzten SINR-Werte für die verschiedenen Funkstrahlen von allen übrigen Beamforming-Vektoren und den zugehörigen Leistungen noch komplizierter, als es hier vereinfacht dargestellt wurde.

Dieses Hauptproblem der Unzuverlässigkeit bzw. Unaktualität der SINR-Werte bzw. der darauf basierenden Rückmeldewerte RW wird durch das erfindungsgemäße Verfahren umgangen.

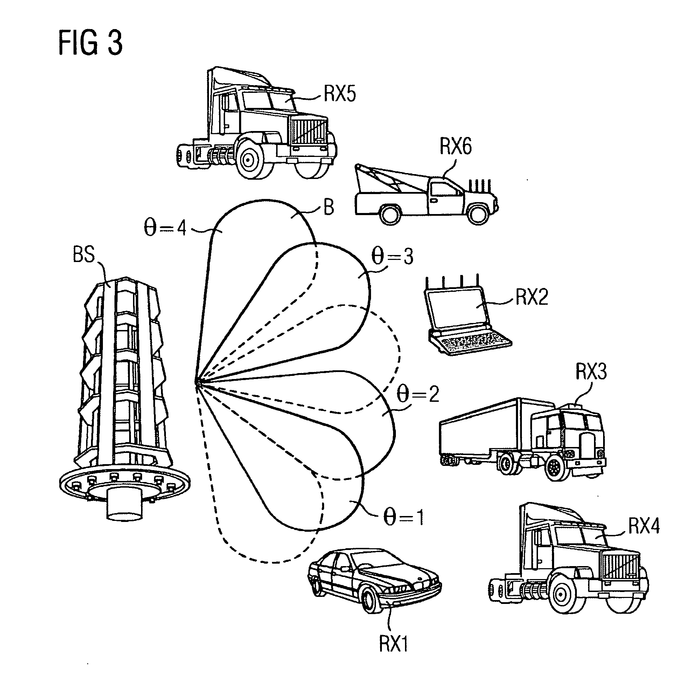

Eine typische Nutzungssituation in einer Zelle eines Mobilfunknetzes ist in Figur 3 dargestellt. Hier sollen insgesamt sechs Endgeräte RX1, ..., RX6 von einer Basisstation BS bedient werden. Die Basisstation BS sendet hierzu mittels ihres Antennenarrays, wie dies zuvor beschrieben wurde, eine Vielzahl von gerichteten Funkstrahlen bzw. Beams B aus, wobei die verschiedenen Beams B den einzelnen Nutzern RX1, ..., RX6 zugewiesen werden. Ein mögliches Verfahren, mit dem die Basisstation den einzelnen Nutzern RX1, ..., RX6 die zur Verfügung stehenden Beams zuweisen kann, wird im Folgenden anhand eines bevorzugten Ausführungsbeispiels der Erfindung beschrieben.

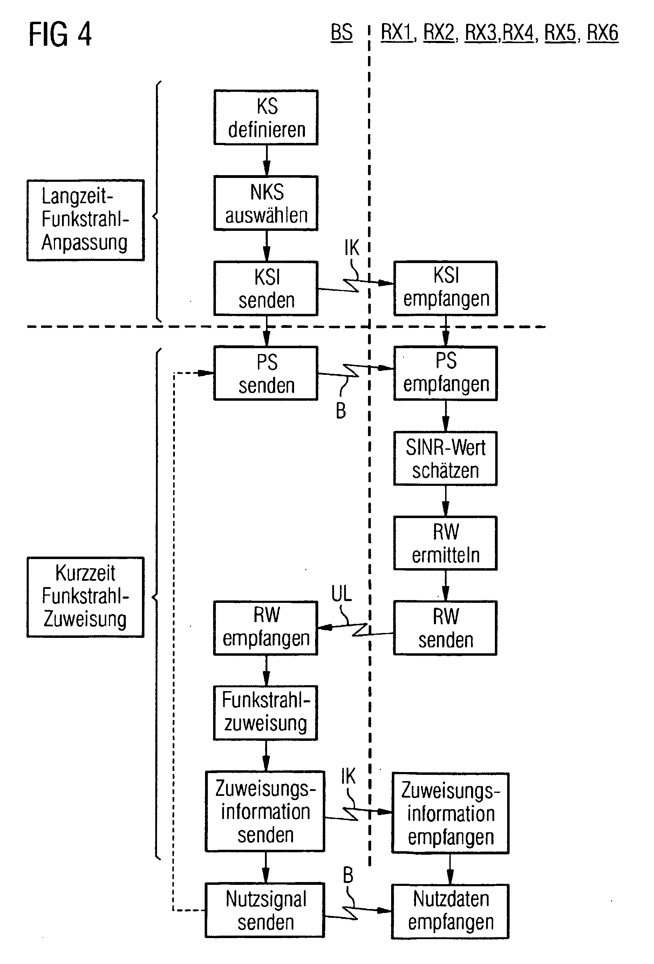

Figur 4 zeigt detaillierter die Verfahrensschritte für dieses erfindungsgemäße Verfahren. Auf der linken Seite sind die einzelnen Schritte dargestellt, die von der Basisstation BS durchgeführt werden, und auf der rechten Seite sind die einzelnen Schritte dargestellt, die jeweils von den verschiedenen mobilen Endgeräten RX1, ..., RX6 durchgeführt werden.

Der Bereich in Figur 4 oberhalb der gepunkteten Linie zeigt dabei die Aktionen im Rahmen der "Langzeit-Funkstrahlanpassung", bei der auf einer Langzeitskala die Funkstrahlen bzw. ein Satz von Funkstrahlen definiert und nur innerhalb von Zeitabständen auf der Langzeitskala verändert bzw. an geänderte Sendebedingungen angepasst werden. Unterhalb der gepunkteten Linie ist dagegen das auf einer Kurzzeitskala stattfindende schnelle Scheduling dargestellt, bei dem die nur langsam variierten Funkstrahlen kurzzeitig den einzelnen Endgeräten RX1, ..., RX6 zugewiesen werden.

Im vorliegenden Fall bedeutet der Begriff "Langzeit" länger als die Kohärenzzeit und der Begriff "Kurzzeit" erheblich kürzer als die Kohärenzzeit des jeweiligen Übertragungskanals. Die "Langzeitskala" liegt dabei vorzugsweise in einer Größenordnung von einigen 100 ms bis s, wogegen die kurzzeitige Zuweisung von Funkstrahlen beim schnellen Scheduling eher im ms-Takt stattfindet.

Da die wesentlichen Parameter der Funkstrahlen, nämlich die Beamforming-Vektoren und die Sendeleistungen, hier im Verhältnis zu den Rückmeldezeiten nur langsam verändert werden, wird das oben ausführlich diskutierte Hauptproblem, welches zu der Unzuverlässigkeit der SINR-Werte und somit zu falschen aktuellen Kanalzustandsinformationen führt, nämlich die Abhängigkeit der SINR-Werte von den Funkstrahlparametern innerhalb der Zelle weitgehend reduziert, teilweise sogar ganz eliminiert.

Bei der Langzeit-Funkstrahlanpassung wird, wie in Figur 4 dargestellt, von der Basisstation zunächst ein Kandidatensatz KS von Funkstrahlen B definiert. Dies kann auf unterschiedlichste Weise erfolgen.

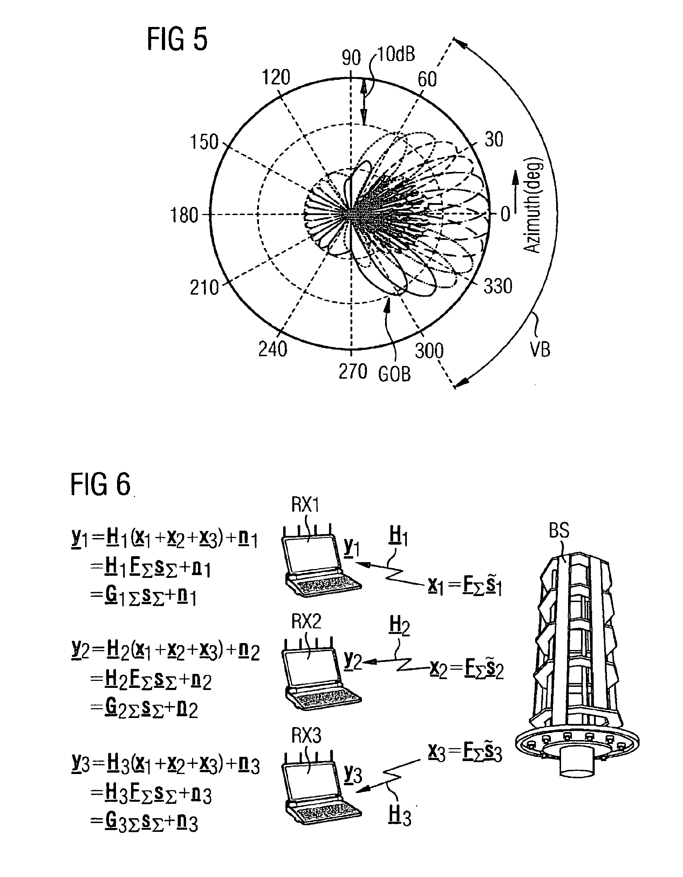

Eine besonders einfache und daher besonders bevorzugte Lösung zur Definition des Kandidatensatzes KS von Funkstrahlen basiert auf dem bereits erwähnten "Grid of Beam"-Konzept. Hierbei wird einfach an das Antennenarray AA ein vorbestimmtes Set von Beamforming-Vektoren so angelegt, dass diese eine Anzahl von Funkstrahlen B aussenden, die einen definierten Versorgungsbereich der Basisstation BS vollflächig abdecken. Dies ist recht anschaulich in Figur 5 dargestellt. Hier wird von der Basisstation BS mit Hilfe eines Grid of Beam GOB mit zwölf Funkstrahlen B ein Versorgungsbereich VB in Form eines 120˚-Sektors abgedeckt, wobei sich die einzelnen Funkstrahlen B jeweils überlappen. Der Versorgungsbereich VB definiert die Zelle, für die die betreffende Basisstation BS zuständig ist, und hängt somit von der Position der Basisstation BS sowie der Positionen der anderen Basisstationen innerhalb des zellularen Netzes ab. So könnte beispielsweise durch eine entsprechende höhere Anzahl von Funkstrahlen und/oder durch breitere Funkstrahlen ein größerer Sektor, ggf. auch der gesamte Vollkreis um die Basisstation BS, abgedeckt werden. Sofern gewünscht wird, dass die Beamforming-Vektoren orthogonal sind, muss die Anzahl der Beams B innerhalb des Grid of Beam GOB unterhalb der Anzahl der Antennen der Basisstation BS liegen. Unter bestimmten Umständen ist es aber auch vorteilhaft, die Anzahl der zur Verfügung stehenden Funkstrahlen, d. h. die Anzahl der Funkstrahlen im Kandidatensatz, oberhalb der Anzahl der Antennen zu wählen, beispielsweise die doppelte Anzahl von Funkstrahlen. Dies reduziert die Wahrscheinlichkeit, dass sich die Nutzer unmittelbar zwischen zwei benachbarten Funkstrahlen des Funkstrahlgitters befinden.

Eine andere Möglichkeit, einen Kandidatensatz von Funkstrahlen zu definieren, besteht darin, dass zunächst ein Set von orthonormalen Funkstrahlen aufgebaut wird, welche den gleichen Raum aufspannt wie die Summe aller sogenannten starken "Eigenbeams" der einzelnen Nutzer.

Der Begriff "Eigenbeam" geht zurück auf einen Ansatz für solche Fälle, in denen die Basisstation nur an einen einzelnen Nutzer sendet. Beim so genannten "Langzeit-Eigenbeamforming" (EBF; Langzeit-Eigenfunkstrahlformen) kann die Beamforming-Matrix $\underline{F}_k$ durch ein Set von Eigenvektoren der MIMO-Kovarianz-Matrix bestimmt werden. Dabei lässt sich die Langzeit-Beamforming-Matrix $\underline{F}_k$ für die Downlink-Übertragung aus der entsprechenden Übertragungs-Beamforming-Matrix $\underline{F}_{k,UL}$ im Uplink berechnen, welche wie folgt gegeben ist:

$$E\{\underline{\dot{H}}_{k,UL}^{*}\,\underline{H}_{k,UL}^{T}\}\,\underline{F}_{k,UL} = \underline{F}_{k,UL}\,\mathrm{diag}(\lambda_1,...,\lambda_r) \quad \mathrm{mit} \quad r \le \min(M_T, M_{Rk}) \qquad (10)$$

Die Eigenwerte $\lambda_1, ..., \lambda_r$ geben dabei die mittleren Langzeit-Leistungsübertragungsfaktoren bezüglich der zugehörigen Langzeit-Beams (definiert durch die Eigenvektoren des entsprechenden Index) an. Hierauf basierend kann dann die Basisstation ein Set von Langzeit-Funkstrahlen definieren, welches im Mittel einen sehr großen Bruchteil der Gesamtenergie (i. d. R. > 95 %) zum Empfänger überträgt, und kann außerdem den verschiedenen ausgewählten Langzeit-Beams die geeignete Sendeleistung zuordnen.

Bei dem hier vorliegenden erfindungsgemäßen Konzept, bei dem sich mehrere Nutzer in einer Zelle befinden, kann ebenso einfach ein orthonormales Funkstrahlset aufgebaut werden, welches den gleichen Raum aufspannt wie die stärksten Eigenbeams aller Nutzer. Dadurch wird sichergestellt, dass keine relevanten Richtungen unberücksichtigt bleiben.

Bei einer anderen, einfacheren und ggf. besseren Variante können die Sende-Beamforming-Vektoren zur Definition des Kandidatensets von Funkstrahlen auch unter Berücksichtigung der gemeinsamen MIMO-Kovarianz-Matrix aller Nutzer ausgewählt werden. Bei diesem Verfahren kann ein Kandidatenset von Q-Langzeit-Funkstrahlen bestimmt werden durch

$$\left(\sum_{k=1}^{K} E\{\underline{H}_k^H \underline{H}_k\}\right)\underline{F}_\Sigma = \underline{F}_\Sigma \operatorname{diag}(\lambda_1,...,\lambda_{r_\Sigma}) \quad \text{mit} \quad r_\Sigma \leq \min(M_T, \sum_{k=1}^{K} M_{Rk}) \qquad (11)$$

Hierbei wurde in Gleichung (11) der Einfachheit halber die Downlink-Matrix $\underline{H}_k = \underline{H}_{k,DL} = \underline{H}_{k,UL}{}^T$ benutzt, obwohl diese an sich nur für TDD-Übertragungsverfahren (Time Division Duplexing; Zeitaufteilungs-Duplexverfahren) gilt. Dennoch können auch bei FDD-Verfahren (Frequency Division Duplexing; Frequenzaufteilungs-Duplexverfahren) mit $E\{\underline{H}_{k,UL}{}^* \underline{H}_{k,UL}{}^T\}$ (d. h. aus den Uplink-Kanälen, sofern mittels einer Frequenztransformation entsprechend der Trägerfrequenz-Offset berücksichtigt wird), oder mit $E\{\underline{H}_k{}^H \underline{H}_k\}$ (d. h. aus den Downlink-Kanälen zuzüglich des Low-Rate-Feedback zur Basisstation) entsprechende Langzeitgrößen bestimmt werden.

Eine solche Auswahl eines Kandidatensets gemäß Gleichung (11) stellt sicher, dass für eine ungleiche Verteilung von Nutzern innerhalb der jeweiligen Zelle nur die Richtungen bedient werden, in denen sich auch tatsächlich Nutzer befinden. Insofern hat dieser Ansatz Vorteile gegenüber dem an sich noch einfacheren "Grid of Beam-Verfahren" (GOB), welches oben zunächst für den Fall beschrieben wurde, dass die Zahl der Funkstrahlen im GOB nicht aufgrund der Kenntnis der gemeinsamen MIMO-Kovarianzmatrix weiter reduziert wird.

Um die Fairness bei einer Entscheidung zur Definition eines Kandidatensets von Langzeit-Funkstrahlen zu erhöhen, können Pfadverluste und Abschattungen aus der MIMO-Kovarianz-Matrix entfernt werden, was verhindert, dass die Auswahl der Beams durch Endgeräte dominiert wird, welche besonders gute Kanäle aufweisen. In diesem Fall kann das Set von Funkstrahlen anstelle von Gleichung (11) gemäß:

$$\left(\sum_{k=1}^{K} \frac{E\{\underline{H}_k^H \underline{H}_k\}}{E\{\|\underline{H}_k\|_F^2\}}\right)\underline{F}_\Sigma = \underline{F}_\Sigma \operatorname{diag}(\lambda_1,...,\lambda_{r_\Sigma}) \quad \text{mit} \quad r_\Sigma \leq \min(M_T, \sum_{k=1}^{K} M_{Rk}) \qquad (12)$$

bestimmt werden, wobei durch die Normalisation mittels des Terms $\|\underline{H}_k\|_F^2 = \Sigma_i \Sigma_j |\underline{H}_{k,ij}|^2$ der mittlere Gesamt-MIMO-Energietransfer pro Benutzer berücksichtigt wird. In beiden Fällen können dann die Anzahl $Q \leq r_\Sigma$ von Funkstrahlen, die tatsächlich genutzt werden, sowie die den einzelnen Funkstrahlen zugeordneten Sendeleistungen z. B. basierend auf einem statistischen Water-Filling-Modell (Wasser-Füllungs-Modell) auf Grundlage der Langzeit-Eigenwerte $\lambda_1, ...,\lambda_{r_\Sigma}$ festgelegt werden. Dieses würde im Falle nur eines einzelnen Nutzers in der Zelle wieder zu dem Einzelnutzer-Eigenbeamforming-Modell gemäß Gleichung (10) zurückführen. D. h. dieses Modell ist ein Spezialfall innerhalb des vorgeschlagenen allgemeinen Modells.

In der Praxis kann es von Vorteil sein, den Satz von Eigenbeams der gemeinsamen MIMO-Kovarianz-Matrix durch einen Satz räumlich klar getrennter Funkstrahlen zu ersetzen, da Eigenbeams in der Regel eine recht komplizierte geometrische Form aufweisen, was sich negativ auf das anschließende schnelle Scheduling auswirken kann. Hierzu werden aus einem regelmäßigen, bevorzugt orthogonalen Funkstrahlgitter (Grid of Beams) der Reihe nach (beginnend mit dem stärksten) jene Beamforming-Vektoren ausgewählt, die notwendig sind, um z. B. 95% der insgesamt verfügbaren Leistung auszunutzen. Für den speziellen Fall von 95% als Schwellwert und einer Variante, die eine gewisse Fairness zwischen den Benutzern sicher stellt, bedeutet dies zum Beispiel

$$\underline{F}_{GOB} = [\underline{f}_{GOB,1}; \underline{f}_{GOB,2},...,\underline{f}_{GOB,M_T}] \quad \text{mit} \quad \underline{F}_{GOB}^H \underline{F}_{GOB} = I_{M_T \times M_T}$$

$$\underline{f}_{GOB,q}^H \left(\sum_{k=1}^{K} \frac{E\{\underline{H}_k^H \underline{H}_k\}}{E\{\|\underline{H}_k\|_F^2\}}\right)\underline{f}_{GOB,q} = \varepsilon_q \quad \text{mit} \quad q \in \{1,2,...,M_T\} \qquad (13)$$

Wähle minimale Zahl von Beams für

$$\sum_q \varepsilon_q \geq 0.95 \operatorname{trace}\left(\sum_{k=1}^{K} \frac{E\{\underline{H}_k^H \underline{H}_k\}}{E\{\|\underline{H}_k\|_F^2\}}\right)$$

wobei die minimale Anzahl $Q \leq M_T$, für die sich diese Bedingung erfüllen lässt, der Zahl der Funkstrahlen im ersten Kandidatensatz entspricht. Für eine Durchsatzmaximierung (ohne Rücksicht auf Fairness) würde hingegen eine Gleichung analog zu (11) gewählt.

Es wird dann im zweiten Schritt basierend auf dem so ausgewählten Kandidatensatz von Funkstrahlen jeweils für die einzelnen Nutzer ein nutzerspezifischer Kandidatensatz NKS ausgewählt. Dadurch wird vermieden, dass die einzelnen Endgeräte RX1, ..., RX6 jeweils unnötigerweise versuchen, für Funkstrahlen, die für sie nicht geeignet sind - da sie beispielsweise einen völlig anderen räumlichen Bereich abdecken - Rückmeldewerte zu berechnen und zurückzusenden. Ein nutzerspezifisches Kandidatenset kann hierbei grundsätzlich auch aus nur einem einzelnen Funkstrahl bestehen. In der Regel umfasst es aber mehrere Funkstrahlen.

Die Auswahl der einzelnen nutzerspezifischen Kandidatensets kann dabei insbesondere auch auf Basis vorgegebener Randbedingungen wie Service-/Qualitätsbedingungen, Nutzerprioritäten etc. erfolgen. Außerdem werden bei der Auswahl der nutzerspezifischen Kandidatensätze - soweit verfügbar - Informationen über die Langzeit-Kanalqualität der einzelnen Funkstrahlen genutzt, die beispielsweise von der Basisstation aus den Uplink-Kanälen der Endgeräte abgeschätzt werden können.

Es wird an dieser Stelle ausdrücklich darauf hingewiesen, dass sowohl für die Bestimmung des Kandidatensatzes in der ersten Stufe als auch zur Auswahl der nutzerspezifischen Kandidatensätze aus dem ersten definierten Kandidatensatz beliebige, auch sehr komplizierte, Algorithmen verwendet können. Dies gilt ebenso für die Bestimmung der über die einzelnen Funkstrahlen ausgesendeten Leistungen. Insofern sind die oben beschriebenen Methoden zur Bestimmung von geeigneten Kandidatensätzen von Funkstrahlen und assoziierter Sendeleistungen nur als derzeit bevorzugte Ausführungsbeispiele zu verstehen.

Im Rahmen der Erfindung kann dagegen eine beliebige Langzeitanpassung der einzelnen Funkstrahlen im Kandidatensatz erfolgen. Dies schließt insbesondere den Spezialfall ein, bei dem den einzelnen Nutzern jeweils bestimmte Antennen zugeordnet werden.

Die genaue Implementation ist letztlich eine Frage des Hardware- und Software-Designs in der Basisstation und hängt u. a. davon ab, auf welche weise und welche Langzeit-Kanalzustandsinformationen die Basisstation bezüglich der Funkstrahlen innerhalb des Kandidatensatzes erhält. In den meisten Fällen können Langzeit-Kanalzustandsinformationen relativ zuverlässig aus dem Uplink-Kanal abgeschätzt werden, da die wesentlichen Kenntnisse, die zu einer Langzeit-Funkstrahlanpassung erforderlich sind, wie Ausbreitungswinkel, mittlere Leistung der Mehrwege-Komponenten etc., im Allgemeinen über eine relativ große Bandbreite konstant sind.

Das jeweils genutzte Langzeit-Funkstrahlanpassungsverfahren sollte jedoch immer derart ausgestaltet sein, dass unnötige Energieverluste sowie die Erzeugung von unnötigen Interferenzen vermieden werden, weil beispielsweise ein Teil der ausgesendeten Leistung definitiv nicht den gewünschten Nutzer erreicht.

In dem in Figur 4 dargestellten dritten Schritt wird dann dafür gesorgt, dass die Basisstation geeignete Kandidatensatz-Informationen KSI über die nutzerspezifischen Kandidatensätze an die betreffenden Endgeräte RX1, ..., RX6 sendet. Dabei sendet die Basisstation an die einzelnen Endgeräte RX1, ..., RX6 alle notwendigen Informationen über die zuvor definierten nutzerspezifischen Kandidatensätze, insbesondere die Anzahl der Beams Q innerhalb der nutzerspezifischen Kandidatensätze NKS und Identifizierungs-Informationen, ob ein bestimmter Beam zu einem bestimmten nutzerspezifischen Kandidatensatz gehört, die auf den Beams ausgestrahlten Leistungen, sofern diese Leistungen nicht zuvor fest definiert sind, und vorzugsweise auch über die zugehörige Pilotsignalstruktur, sofern diese nicht ebenfalls allgemein definiert ist. Die Übertragung dieser Kandidatenset-Informationen IKS erfolgt bevorzugt auf einem allgemeinen Informationskanal, hier auf dem Broadcast Channel (BCH). Wie Figur 4 zeigt, erfolgt auch diese Übersendung der Kandidatenset-Informationen KSI auf einer Langzeitskala, entsprechend der Anpassung bzw. Veränderung der einzelnen Beams B in den Kandidatensätzen KS, NKS.

Die einzelnen Endgeräte RX1, ..., RX6 empfangen somit in entsprechend relativ langen zeitlichen Abständen von einigen 100 ms bis einigen s neue Kandidatensatz-Informationen KSI und wissen daher, welche aktuellen Kandidatensätze NKS für sie zur Verfügung stehen und welche von der Basisstation ausgesendeten Funkstrahlen B sie bei den weiteren in Figur 4 dargestellten Verfahrensschritten zu berücksichtigen haben.

Alle weiteren in dieser Figur dargestellten Verfahrensschritte erfolgen dabei auf einer Kurzzeitskala, beispielsweise in ms-Abständen. Hierbei sendet die Basisstation zunächst regelmäßig über die Funkstrahlen Pilotsignale an die einzelnen Endgeräte RX1, ..., RX6 aus, wobei für die Übertragung beispielsweise sogenannte SCPiCHs (Secondary Common Pilot Channels; sekundäre gemeinsame Pilotkanäle) genutzt werden. Die einzelnen Endgeräte RX1, ..., RX6 empfangen diese Pilotsignale auf den verschiedenen Funkstrahlen B und können dann in einem nachfolgenden Schritt jeweils den SINR-Wert abschätzen.

Dies kann noch einmal anhand von Figur 6 verdeutlicht werden. Die dort dargestellte Situation ist der Einfachheit halber wieder auf drei aktive Nutzer beschränkt. In dieser Figur werden für das erfindungsgemäße Verfahren die von der Basisstation gesendeten Signalvektoren $\underline{X}_1, \underline{X}_2, \underline{X}_3$ und die von den einzelnen Nutzern RX1, RX2, RX3 empfangenen Signalvektoren $\underline{Y}_1, \underline{Y}_2, \underline{Y}_3$ gezeigt. Die Basisstation nutzt hierbei zur Definition der einzelnen Funkstrahlen eine Beamforming-Matrix $\underline{F}_\Sigma$, für die erfindungsgemäß die Anpassung nur auf Langzeitbasis erfolgt. Auf jedem Funkstrahl, welcher zu einer Spalte dieser Beamforming-Matrix $\underline{F}_\Sigma$ gehört, wird ein Pilotsignal auf dem SCPiCH des betreffenden Funkstrahls übertragen, welches jedem der k=3 Nutzer RX1, RX2, RX3 eine verlässliche Schätzung der effektiven Kanal-Matrix $\underline{G}_{k\Sigma}$ bzw. der Spalten dieser Matrix erlaubt, welche abgeschätzt werden müssen, um die SINR-Werte aller Funkstrahlen innerhalb des Kandidatensatzes zu schätzen. Da auch die Leistungen $P_\theta=E\{|\underline{s}_{\Sigma\theta}|^2\}$ für alle Funkstrahlen nur auf einer Langzeitskala angepasst werden und somit den entsprechenden Endgeräten RX1, RX2, RX3 alle relevanten in Figur 6 enthaltenen Parameter jeweils bekannt sind oder gemessen werden können, kann jeder Nutzer verlässlich die SINR-Werte abschätzen.

In dem in Figur 4 dargestellten folgenden Schritt werden dann auf Basis der geschätzten SINR-Werte von den einzelnen Endgeräten RX1, ..., RX6 jeweils Rückmeldewerte RW ermittelt.

Besonders bevorzugt werden hierzu die SINR-Werte in CQI-Werte umgewandelt, welche das von dem jeweiligen Endgerät auf dem betreffenden Funkstrahl gewünschte Modulations- und Kodierungsschema (MCS) enthält. Innerhalb der HSDPA-Spezifikationen der 3GPP-Norm wird beispielsweise eine MCS-Stufe innerhalb eines 5Bit-CQI codiert. Die Verwendung der CQI-Werte als Rückmeldewerte RW hat den Vorteil, dass durch die Auswahl des Modulations- und Kodierungsschemas durch das betreffende Endgerät unmittelbar die Endgerätequalität mit in den Rückmeldewert RW eingeht. Somit erhält die Basisstation mit sehr geringem Signalisierungsaufwand alle erforderlichen Werte.

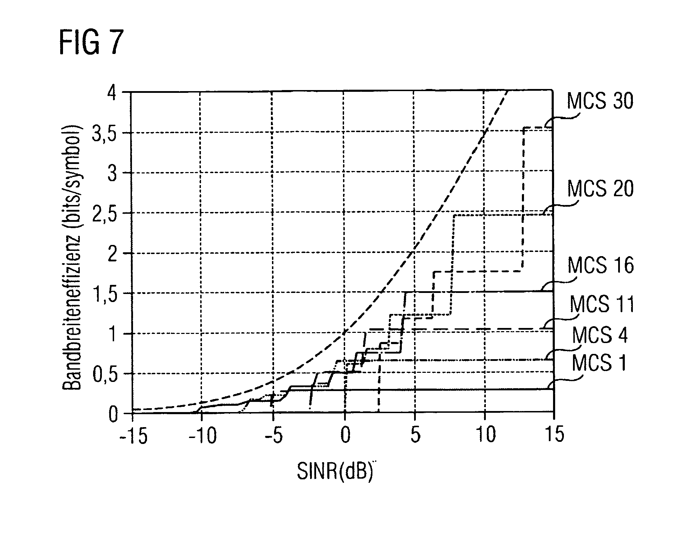

Figur 7 zeigt ein Beispiel, wie das jeweilige Endgerät auf Basis des abgeschätzten SINR-Werts eine MCS-Stufe bestimmen kann. In dem Diagramm ist die Zuordnung von MCS-Stufen zum gemessenen SINR-Wert dargestellt unter der Bedingung, dass ein maximaler Signaldurchsatz erreicht werden soll. Es handelt sich hierbei lediglich um ein Beispiel. Grundsätzlich kann die Wahl der MCS-Stufe auch auf Basis von anderen Bedingungen, beispielsweise im Hinblick auf eine Reduzierung der Frame-Error-Rate (Rahmen-Fehler-Rate) oder der Bit-Error-Rate (Bit-Fehler-Rate) etc. erfolgen. In dem Diagramm ist außerdem in Form einer gestrichelten Linie die sogenannte "Shannon-Grenze" eingezeichnet, welche die mit einer idealen Kodierung maximal erreichbare Übertragungskapazität angibt. In Figur 7 sind der besseren Übersichtlichkeit wegen nur 6 MCS-Stufen aus einem Set von insgesamt 30 MCS-Stufen dargestellt, wie sie üblicherweise innerhalb beispielsweise der 3GPP HSDPA-Spezifikation verwendet werden. Innerhalb dieses reduzierten Sets von 6 MCS-Stufen würde beispielsweise die MCS-Stufe 20 gewählt, wenn ein SINR-Wert zwischen 8 dB und 13 dB ermittelt wurde, da diese MCS-Stufe die höchste Bandbreiteneffizienz und somit den maximalen Durchsatz bei diesem SINR gewährleistet. Andererseits würde beispielsweise für einen SINR-Wert unter -7 dB die MCS-Stufe 1 gewählt werden, um einen maximalen Durchsatz zu erreichen.

Die ermittelten Rückmeldewerte RW werden dann auf einem Uplink-Kanal UL von den einzelnen Endgeräten RX1, ..., RX6 an die Basisstation BS gesendet, welche auf Basis der empfangenen Rückmeldewerte RW die eigentliche Funkstrahlzuweisung vornimmt. Hierbei werden nicht nur die Rückmeldewerte berücksichtigt, sondern auch weitere Bedingungen wie beispielsweise verschiedenste QoS-Bedingungen (QoS = Quality of Service; Dienstqualität), d. h. beispielsweise vom System zugesicherte Eigenschaften wie Datenrate, maximales Delay etc., Prioritäten der einzelnen Nutzer, Fairness-Bedingungen (d. h. ob ein Nutzer bereits längere Zeit nicht bedient wurde), die zu erreichende Bandbreiteneffizienz oder die überhaupt erreichbare Qualität bei den einzelnen Endgeräten. Insbesondere sollte hierbei auch berücksichtigt werden, welche Fähigkeiten die einzelnen Endgeräte haben, beispielsweise ob sie überhaupt über ein Antennenarray verfügen und somit mehrere Funkstrahlen geeignet verarbeiten können oder lediglich eine einzelne Antenne besitzen. Diese Informationen erhält die Basisstation vorzugsweise bereits, sobald das betreffende Endgerät sich in die Zelle der Basisstation bewegt, beispielsweise mit der Handover-Signalisierung (Übergabe-Signalisierung).

Bei der Festlegung von geeigneten Funkstrahlkombinationen für die einzelnen Nutzer für die nachfolgende Übertragung ist es durchaus möglich, dass einigen Nutzern mehrere Funkstrahlen zugewiesen werden, anderen Nutzern nur ein Funkstrahl und wieder andere Nutzer im nachfolgenden Übertragungszeitraum überhaupt keinen Funkstrahl zugewiesen bekommen.

Ein typisches Beispiel hierfür ist in Figur 3 dargestellt. Hier hat die Basisstation aus einem Grid of Beam mit 6 Funkstrahlen letztlich 4 Funkstrahlen für den Kandidatensatz ausgewählt. Die nutzerspezifischen Kandidatensätze für die einzelnen Nutzer RX1, ..., RX6 sind z. B. Funkstrahl $\theta=1$ für den ersten Nutzer RX1, die Funkstrahlen $\theta=2$ und $\theta=3$ für den zweiten Nutzer RX2, der Funkstrahl $\theta=2$ für den dritten Nutzer RX3, die Funkstrahlen $\theta=1$ und $\theta=2$ für den vierten Nutzer RX4, der Funkstrahl $\theta=4$ für den fünften Nutzer RX5 und die Funkstrahlen $\theta=3$ und $\theta=4$ für den sechsten Nutzer RX6. Basierend auf den schnellen CQI-Rückmeldewerten und verschiedensten o. g. weiteren Parametern hat dann der Scheduler entschieden, den Strahl $\theta=1$ für Nutzer 1 zu wählen, den Strahl $\theta=2$ für Nutzer drei und die Strahlen $\theta=3$ und $\theta=4$ für ein SMUX-Verfahren, mit dem der sechste Nutzer RX6 bedient wird. Dabei wurden entsprechend den CQI-Rückmeldewerten passende MCS-Stufen gewählt. Die anderen Nutzer werden im nachfolgenden Übertragungsintervall (TTI) kurzzeitig nicht bedient, aber beispielsweise während einer der später folgenden TTIs, ggf. auch bevorzugt, berücksichtigt.

Vor der nachfolgenden Übertragung der Nutzsignale muss die Basisstation nun noch allen mobilen Nutzern die getroffene Scheduling-Entscheidung mitteilen, d. h. die Nutzer erhalten die benötigten Informationen, um die nachfolgenden Nutzdaten detektieren zu können (d. h. welcher Funkstrahl bzw. welcher Satz von Funkstrahlen für den betreffenden Benutzer verwendet wird und möglicherweise die Entscheidung zu den gewählten MCS, sofern die BS vom Wunsch der MS abweicht). Dies kann z.B. über einen Broadcast-Kanal oder auch benutzerspezifische Kontrollkanäle geschehen.

Anschließend wird in der nachfolgenden TTI ein Nutzsignal übertragen, das die eigentlich an die Endgeräte zu übertragenden Sprach- und/oder Multimedia-Daten enthält. Wie dies durch den in Figur 4 durch den gestrichelten Rücksprungpfeil angedeutet ist, wird nach der Übersendung der Nutzsignale von der Basisstation sofort wieder ein neues Pilotsignal ausgesendet und von den Endgeräten RX1, RX2,..., RX6 werden auf Basis des empfangenen Pilotsignals wiederum die SINR-Werte abgeschätzt und daraus Rückmeldewerte ermittelt, die wieder an die Basisstation BS gesendet werden, welche dann den Endgeräten RX1, RX2,..., RX6 die Funkstrahlen für die nächste TTI zuweist. Diese Schleife wird hier für jedes TTI durchlaufen. Lediglich wenn auf der Langzeitskala eine Anpassung der Funkstrahlen, d. h. eine Änderung der Kandidatensätze erfolgt, werden von der Basisstation wieder neue Datensatz-Informationen KSI über den Broadcast Channel an die Endgeräte RX1, RX2,..., RX6 gesendet, die daraufhin die nachfolgenden Schätzungen der SINR-Werte auf Basis der neuen nutzerspezifischen Kandidatensätze und zugehörigen Parameter durchführen.

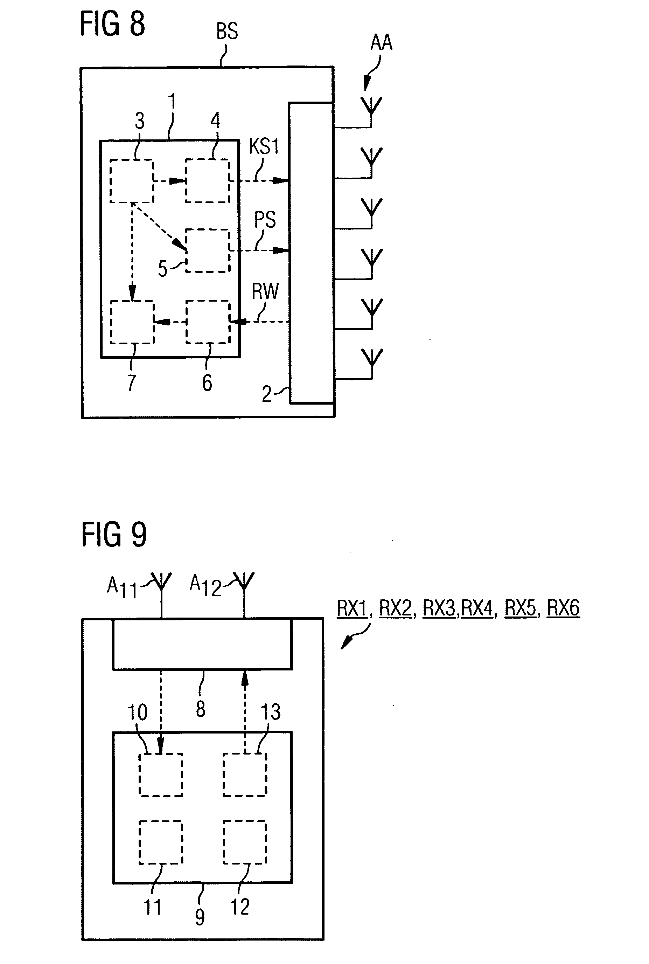

Figur 8 zeigt eine grob schematische Darstellung für eine Basisstation BS, mit der dieses Verfahren durchführbar ist.

Diese Basisstation BS weist ein Antennenarray AA mit mehreren Antennen auf. Das Antennenarray AA ist an eine Transceiver-Einheit 2 der Basisstation BS angeschlossen, welche für den Empfang und die Versendung der Signale über das Antennenarray AA zuständig ist. Es ist klar, dass diese Basisstation BS auch alle weiteren üblichen Komponenten einer solchen Basisstation aufweist. Der besseren Übersichtlichkeit wegen sind in Figur 8 jedoch nur die wesentlichsten Komponenten für die Durchführung des Verfahrens dargestellt.

Eine dieser Komponenten ist eine Funkstrahlen-Konfigurationseinrichtung 3, die den Kandidatensatz von Funkstrahlen B festlegt. D. h. diese Funkstrahlen-Konfigurationseinrichtung 3 sorgt für die Definition des ersten Kandidatensatzes KS und auch für die Auswahl der einzelnen Funkstrahlen B für die nutzerspezifischen Kandidatensätze NKS. Die Funkstrahlen-Konfigurationseinrichtung 3 erhält die hierzu notwendigen Parameter, wie beispielsweise die Rahmenbedingungen und/oder Abschätzungen über die Langzeit-Kanalqualitäten, von den hierfür zuständigen (nicht näher dargestellten) Komponenten der Basisstation BS.

Die Funkstrahlen-Konfigurationseinrichtung 3 übermittelt dann beispielsweise den nutzerspezifischen Kandidatensatz NKS an eine Kandidatensatz-Signalisierungseinrichtung 4, welche den Endgeräten die notwendigen Informationen KSI über die Funkstrahlen B des nutzerspezifischen Kandidatensatzes NKS gemäß dem vorbeschriebenen Verfahren signalisiert. Hierzu werden die Kandidatensatz-Informationen KSI an die Transceiver-Einheit 2 übermittelt, die dann für die Aussendung über das Antennenarray AA sorgt.

Sowohl die Funkstrahlen-Konfigurationseinrichtung 3 als auch die Kandidatensatz-Signalisierungseinrichtung 4 arbeiten auf der Langzeit-Skala.

Die notwendigen Informationen über die nutzerspezifischen Kandidatensätze NKS werden außerdem von der Funkstrahlen-Konfigurationseinrichtung 3 an eine Pilotsignal-Versendungseinrichtung 5 gesendet, welche auf einer Kurzzeit-Skala - beispielsweise in regelmäßigen zeitlichen Abständen zwischen den einzelnen TTIs - Pilotsignale PS über die Funkstrahlen B der jeweiligen nutzerspezifischen Kandidatensätze NKS an die Endgeräte aussendet.

Weiterhin weist die Basisstation eine Rückmeldungs-Empfangseinrichtung 6 auf, welche in ebenso regelmäßigen Abständen die Rückmeldewerte RW, beispielsweise in Form von CQI-Werten, von den einzelnen Endgeräten RX1, RX2, ..., RX6 empfängt und diese Rückmeldewerte RW dann an eine Funkstrahl-Zuweisungseinrichtung 7, den so genannten Scheduler 7, weiterleitet. Diese Funkstrahlen-Zuweisungseinrichtung 7 ist ebenfalls durch die Funkstrahlen-Konfigurationseinrichtung darüber informiert worden, welchen Nutzern welche nutzerspezifischen Kandidatensätze NKS zugeordnet sind.

Auf Basis der Rückmeldewerte RW, der Informationen über die nutzerspezifischen Kandidatensätze NKS sowie weiterer Informationen weist dann der Scheduler 7 den verschiedenen Endgeräten RX1, ..., RX6 geeignete Kombinationen von Funkstrahlen B für eine nachfolgende Signalübertragung, beispielsweise für den nächsten TTI, zu.

Die vor der eigentlichen Nutzsignalübertragung von der Basisstation durchzuführende Signalisierung an die Endgeräte über die zugewiesenen Funkstrahlen erfolgt mittels einer (nicht dargestellten) Signalisierungseinrichtung, welche auch für andere Signalisierungszwecke genutzt werden kann.

Sowohl die Funkstrahlen-Konfigurationseinrichtung 3 als auch die Kandidatensatz-Signalisierungseinrichtung 4, die Pilotsignal-Versendungseinrichtung 5, die Rückmelde-Empfangseinrichtung 6 und die Funkstrahlen-Zuweisungseinrichtung 7 können in Form von Software auf einem Mikroprozessor 1 der Basisstation BS realisiert sein.

Die beiden Signalisierungseinrichtungen 4 und 5 und die Empfangseinrichtung 6 dienen dazu, die Transceiver-Einheit 2 zu veranlassen, jeweils die entsprechenden Signale zu übertragen bzw. aus den empfangenen Signalen die entsprechenden Rückmeldewerte RW zu extrahieren, damit diese an die Funkstrahlen-Zuweisungseinrichtung 7 übergeben werden können. Insbesondere diese Einrichtungen 4, 5, 6 könnten daher auch in anderen Einheiten der Basisstation, insbesondere in der Transceiver-Einheit 2, integriert sein. Die Funkstrahlen-Konfigurationseinrichtung und der Scheduler 7 können prinzipiell auch in anderen Einheiten des Mobilfunknetzes realisiert sein und die für die betreffende Basisstation entsprechenden Aufgaben übernehmen.

Figur 9 zeigt in grob schematischer Form ein mobiles Endgerät RX1,..., RX6, welches in dem erfindungsgemäßen Verfahren genutzt werden kann.

Auch hier sind der Einfachheit halber nur die für die Erfindung wesentlichsten Komponenten dargestellt. D. h. das mobile Endgerät RX1, ..., RX6 weist sämtliche üblicherweise in solchen Endgeräten vorhandenen Komponenten und Funktionseinheiten auf.

In dem vorliegenden Beispiel weist das Endgerät RX1,..., RX6 ein Antennenarray mit zwei Antennen A11, A12 auf, welche wiederum an eine Transceiver-Einheit 8 angeschlossen sind. Eine Empfangseinrichtung 10 dient zum Empfang von verschiedenen von einer Basisstation BS ausgesendeten Funkstrahlen B und zum Empfang von Informationen über einen dem Endgerät zugeordneten Kandidatensatz NKS von Funkstrahlen B. Weiterhin weist das Endgerät RX1, ..., RX6 eine Funkstrahlen-Identifizierungseinrichtung 11 auf, um einen empfangenen Funkstrahl B als zu dem nutzerspezifischen Kandidatensatz NKS zugehörig zu identifizieren. Von einer Funkstrahlqualität-Ermittlungseinrichtung 12 wird dann für die zum Kandidatensatz NKS gehörigen Funkstrahlen B auf Basis von Pilotsignalen, die das Endgerät RX1, ..., RX6 jeweils über die verschiedenen Funkstrahlen B von der Basisstation BS empfangen hat, ein SINR-Wert ermittelt. Auf Basis dieses SINR-Werts wird dann in einer Rückmeldungseinrichtung 13 der Rückmeldewert RW, beispielsweise der CQI-Wert ermittelt, der dann wiederum über die Transceiver-Einheit 8 und das Antennenarray mit den beiden Antennen $A_{11}$, $A_{12}$ an die Basisstation BS zurückgesendet wird.

Die Empfangseinrichtung 10, die Funkstrahlen-Identifizierungseinrichtung 11, die Funkstrahlqualität-Ermittlungseinrichtung 12 und die Rückmeldungseinrichtung 13 sind hier wiederum in Form von Software auf einem Mikroprozessor 9 des Endgeräts RX1, ..., RX6 realisiert. Grundsätzlich können diese Einrichtungen aber auch auf verschiedenste andere Komponenten und Funktionseinrichtungen verteilt bzw. in diese integriert sein. So weisen in der Regel auch bereits bestehende Mobilfunkgeräte entsprechende Empfangseinrichtungen und Rückmeldungseinrichtungen auf, da ja auch bei den bisherigen Verfahren die Endgeräte SINR-Werte oder ähnliche Kanalqualitätswerte abschätzen und diese an die Basisstation zurückliefern. Wesentlich für die vorliegende Erfindung ist jedoch, dass das mobile Endgerät RX1, ..., RX6 in der Lage ist, einen Funkstrahl B dahingehend zu identifizieren, ob er zu dem zugehörigen nutzerspezifischen Kandidatensatz NKS dieses Endgeräts RX1, ..., RX6 gehört und dafür zu sorgen, dass nur für diese Funkstrahlen tatsächlich die SINR-Werte ermittelt und darauf basierende Rückmeldewerte RW an die Basisstation BS gesendet werden.

Abschließend wird noch einmal darauf hingewiesen, dass es sich bei den in den Figuren konkret dargestellten und zuvor detailliert beschriebenen Verfahren lediglich um Ausführungsbeispiele handelt, die vom Fachmann modifiziert werden können, ohne den Rahmen der Erfindung zu verlassen.

Insbesondere könnten im Detail bei den einzelnen Verfahren Veränderungen vorgenommen werden, um das Verfahren - anders als hier bisher dargestellt - nicht nur für Flat-Fading-Übertragungsverfahren, sondern auch bei frequenzselektiven Kanälen anzuwenden. Ebenso ist es auch möglich, das Verfahren nicht nur bei adaptiver Modulation und Kodierung für einzelne Datenströme einzusetzen, d. h. bei individueller Datenstromkodierung, sondern die Erfindung ist auch anwendbar bei Verfahren, bei denen die Datenströme nicht individuell kodiert werden, z. B. in so genannten Outer-Channel-Coding-Verfahren (Kanalübergreifendes Kodierungsverfahren), bei denen die Kodierung über die einzelnen Teil-Funkstrahlen hinweg zu einem bestimmten Nutzer erfolgt.

Da hier Langzeit- und Kurzzeit-Anpassungen miteinander kombiniert wurden, ist das erfindungsgemäße Verfahren ausgezeichnet im Bereich von niedrigen bis mittleren Geschwindigkeiten der einzelnen Endgeräte innerhalb der Zelle einsetzbar. Aber auch im Bereich von höheren Endgerät-Geschwindigkeiten kann das Verfahren von Nutzen sein. Das Verfahren ist besonders attraktiv für FDD-Verfahren, kann aber insbesondere bei höherer Mobilität der einzelnen Nutzer bzw. Geschwindigkeiten der Endgeräte bei TDD-Verfahren nützlich sein. Im Übrigen kann das Verfahren für viele beliebige Luftschnittstellen, beispielsweise GSM (Global System for Mobile Communications, 2. Mobilfunkgeneration), UMTS (Universal Mobile Telecommunication System, 3. Mobilfunkgeneration), WCDMA (Wideband Code Division Multiple Access, einer der Standards der 3. Mobilfunkgeneration), OFDM-4G (Orthogonal Frequency Division Multiplexing for 4th Generation Systems) o. a. verwendet werden.

**Patentansprüche**

1. Verfahren zur Zuweisung von Übertragungskapazitäten bei einer Signalübertragung von einer Basisstation (BS) eines zellularen Funknetzes an eine Anzahl von mobilen Endgeräten (RX1, RX2,..., RX6)

   - bei dem die Basisstation (BS) gleichzeitig mehrere gerichtete Funkstrahlen (B) aussendet **dadurch** charakterisiert, dass
   - bei dem zunächst ein erster Kandidaten-Satz (KS) von Funkstrahlen (B) definiert wird, deren wesentliche Parameter im Verhältnis zu einer Rückmeldungszeit der Endgeräte (RX1, RX2,..., RX6) nur langsam verändert werden,
   - bei dem den Endgeräten (RX1, RX2,..., RX6) von der Basisstation (BS) Informationen (KSI) über die Funkstrahlen (B) des Kandidatensatzes (KS) signalisiert werden,

- bei dem von der Basisstation (BS) in im Verhältnis zur veränderungszeit der Funkstrahlen kurzen zeitlichen Abständen Pilotsignale (PS) über die Funkstrahlen (B) des Kandidatensatzes (KS) ausgesendet werden,

- bei dem die Endgeräte (RX1, RX2,..., RX6) jeweils mit Hilfe der empfangenen Pilotsignale (PS) für jeden dieser Funkstrahlen (B) des Kandidatensatzes (KS) einen SINR-Wert ermittelt,

- bei dem die Endgeräte (RX1, RX2,..., RX6) für jeden empfangenen Funkstrahl (B) jeweils einen auf Basis des betreffenden SINR-Werts ermittelten Rückmeldewert (RW) an die Basisstation (BS) übermitteln,

- und bei dem unter Verwendung der Rückmeldewerte (RW) den verschiedenen Endgeräten geeignete Kombinationen von Funkstrahlen (B) für eine nachfolgende Signalübertragung von der Basisstation (BS) zugewiesen werden.

2. Verfahren nach Anspruch 1, bei dem aus den zum ersten Kandidaten-Satz (KS) gehörenden Funkstrahlen (B) für jedes der Endgeräte ein zweiter, nutzerspezifischer Kandidatensatz (NKS) von Funkstrahlen (B) ausgewählt wird, welcher den betreffenden Endgeräten (RX1, RX2,..., RX6) jeweils signalisiert wird,

und bei dem die Endgeräte (RX1, RX2,..., RX6) mit Hilfe der empfangenen Pilotsignale (PS) nur für die Funkstrahlen (B) des ihnen zugeordneten nutzerspezifischen Kandidatensatzes (NKS) jeweils einen SINR-Wert ermitteln und einen auf Basis des jeweiligen SINR-Werts ermittelten Rückmeldewert (RW) an die Basisstation (BS) übermitteln.

3. Verfahren nach Anspruch 1 oder 2, bei dem die wesentlichen Parameter des betreffenden Kandidaten-Satzes (KS, NKS) von Funkstrahlen (B) nur langsam im Verhältnis zur Kohärenzzeit verändert werden.

4. Verfahren nach einem der Ansprüche 1 bis 3, bei dem von der Basisstation (BS) an die Endgeräte (RX1, RX2,..., RX6) zunächst Informationen über die Pilotstruktur eines nachfolgend über die Funkstrahlen des Kandidatensatz ausgesendeten Pilotsignals (PS) übermittelt werden.

5. Verfahren nach einem der Ansprüche 1 bis 4, bei dem von den Endgeräten (RX1, RX2,..., RX6) jeweils auf Basis des betreffenden SINR-Werts ein CQI-Wert als Rückmeldewert (RW) ermittelt und an die Basisstation (BS) übermittelt wird.

6. Verfahren nach einem der Ansprüche 1 bis 5, bei dem Informationen über die zum Kandidatensatz gehörigen Funkstrahlen und/oder die Sendeleistungen auf den Funkstrahlen und/oder die Pilotstruktur über einen allgemeinen Informationskanal (IK) von der Basisstation an die Endgeräte übermittelt werden.

7. Verfahren nach einem der Ansprüche 1 bis 6, bei dem der erste Kandidatensatz auf Basis eines Funkstrahlgitters (GOB) definiert wird, welches eine Anzahl von Funkstrahlen (B) umfasst, die einen definierten Versorgungsbereich (VB) der Basisstation (BS) vollflächig abdecken.

8. Verfahren nach einem der Ansprüche 1 bis 7, bei dem die Rückmeldewerte (RW) jeweils ein Modulations- und Kodierungsschema (MCS) festlegen, mit dem die Basisstation (BS) über die einzelnen Funkstrahlen (B) an die verschiedenen Endgeräte (RX1, RX2,...,RX6) sendet.

9. Basisstation (BS) mit Mitteln zur Zuweisung von Übertragungskapazitäten für eine gleichzeitige Signalübertragung an eine Anzahl von mobilen Endgeräten (RX1, RX2,...,RX6) in einem zellularen Funknetz über mehrere gerichtete Funkstrahlen (B), charakterisiert durch

- eine Funkstrahlen-Konfigurationseinrichtung (3), um einen Kandidatensatz von Funkstrahlen festzulegen, wobei die wesentlichen Parameter der Funkstrahlen im Verhältnis zu einer Rückmeldungszeit der Endgeräte nur langsam verändert werden,

- eine Kandidatensatz-Signalisierungseinrichtung (4), um den Endgeräten (RX1, RX2,...,RX6) Informationen (KS) über die Funkstrahlen (B) des Kandidatensatzes (KS) zu signalisieren,

- eine Pilotsignal-Versendungseinrichtung (5), um Pilotsignale (PS) in im Verhältnis zur Veränderungszeit der Funkstrahlen kurzen zeitlichen Abständen über die Funkstrahlen (B) des Kandidatensatzes (KS) an die Endgeräte (RX1, RX2, ..., RX6) auszusenden,

- eine Rückmeldungs-Empfangseinrichtung (6), um von den verschiedenen Endgeräten Rückmeldewerte (RW) zu empfangen, welche auf Basis von jeweils mit Hilfe der empfangenen Pilotsignale (PS) für jeden empfangenen Funkstrahl (B) ermittelten SINR-Werten ermittelt wurden,

- und eine Funkstrahlen-Zuweisungseinrichtung (7), um unter Verwendung der Rückmeldewerte (RW) den verschiedenen Endgeräten (RX1, RX2,...,RX6) geeignete Kombinationen von Funkstrahlen (B) für eine nachfolgende Signalübertragung zuzuweisen.

**10.** Mobiles Endgerät (RX1, RX2, ..., RX6) zur Verwendung in einem Verfahren nach einem der Ansprüche 1 bis 8 mit

- einer Empfangseinrichtung (10) zum Empfang von verschiedenen von einer Basisstation (BS) ausgesendeten Funkstrahlen (B) und zum Empfang von Informationen (KSI) über einen dem Endgerät zugeordneten Kandidatensatz (KS, NKS) von Funkstrahlen (B),
- einer Funkstrahlen-Identifizierungseinrichtung (11), um einen empfangenen Funkstrahl (B) als zu dem Kandidatensatz (KS, NKS) zugehörig zu identifizieren,
- einer Funkstrahlqualität-Ermittlungseinrichtung (12), um für die zum Kandidatensatz (KS, NKS) gehörigen Funkstrahlen (B) auf Basis von Pilotsignalen (PS), die das Endgerät (RX1) jeweils über die verschiedenen Funkstrahlen (B) von der Basisstation (BS) empfangen hat, einen SINR-Wert zu ermitteln,
- eine Rückmeldungseinrichtung (13), um nur für die zum Kandidatensatz (KS, NKS) des betreffenden Endgeräts (RX1, RX2,...,RX6) gehörigen Funkstrahlen (B) auf Basis der SINR-Werte ermittelte Rückmeldewerte (RW) an die Basisstation (BS) zu versenden.

## Claims

**1.** Method for allocating transmission capacities of transmission capacities for a signal transmission from a base station (BS) of a cellular radio network to a number of mobile terminals (RX1, RX2, ..., RX6)

- in which the base station (BS) simultaneously emits a number of directed beams (B), **characterised in that**
- in which initially a first candidate set (KS) of beams (B) is defined, of which major parameters are only changed slowly in relation to a feedback time of the terminals (RX1, RX2, ...,RX6),
- in which information (KSI) is signalled to the terminals (RX1, RX2, ...,RX6) from the base station (BS) over the beams (B) of the candidate set (KS),
- in which pilot signals (PS) are emitted from the base station (BS) over the beams (B) of the candidate set (KS) at short intervals in relation to the modification time of the beams,
- in which the terminals (RX1, RX2, ...,RX6) in each case with the aid of the received pilot signal (PS) determine for each of these radio beams (B) of the candidate set (KS) an SINR value,
- in which the terminals (RX1, RX2, ...,RX6), for each received beam (B), transmit to the base station (BS) a acknowledgement value (RW) determined on the basis of the relevant SINR value in each case,
- and in which, using the acknowledgement values (RW) the different terminals are allocated suitable combinations of beams (B) for a subsequent signal transmission from the base station (BS).

**2.** Method as claimed in claim 1, in which, from the beams (B) belonging to the first candidate set (KS) a second, userspecific candidate set (NKS) of beams (B) is selected, which, for each of the terminals, is signalled to the terminals concerned (RX1, RX2, ...,RX6) in each case,
and in which the terminals (RX1, RX2, ...,RX6) with the aid of the received pilot signals (PS) only determine for the beams (B) of the user-specific candidate set (NKS) assigned to them an SINR value in each case and transmit to the base station (BS) an acknowledgement value (RW) determined on the basis of the respective SINR value.

**3.** Method as claimed in claim 1 or 2, in which the major parameters of the relevant candidate set (KS, NKS) of beams (B) are changed only slowly in relation to the coherence time.

**4.** Method as claimed in one of the claims 1 to 3, in which information is initially sent from the base station (BS) to the terminals (RX1, RX2, ...,RX6) about the pilot structure of a pilot signal (PS) subsequently transmitted over the beams of the candidate set.

**5.** Method as claimed in one of the claims 1 to 4, in which a CQI value is determined as a acknowledgement value (RW) by the terminals (RX1, RX2, ...,RX6) on the basis of the relevant SINR value in each case and is transmitted to the base station (BS).

**6.** Method in accordance with one of the claims 1 to 5, in which information about the beams belonging to the candidate set and/or the transmit powers on the beams and/or the pilot structure is transmitted over a general information channel (IK) from the base station to the terminals.

7. Method in accordance with one of the claims 1 to 6, in which the first candidate set is defined on the basis of a grid of beams (GOB) which comprises a number of beams (B) which fully covers the one defined coverage area (VB) of the base station (BS).

8. Method in accordance with one of the claims 1 to 7, in which the acknowledgement values (RW) define a modulation and coding scheme (MCS) in each case, with which the base station (BS) transmits over the individual beams (B) to the different terminals (RX1, RX2, ...,RX6).

9. Base station (BS) with means for allocating transmission capacities for a simultaneous signal transmission to a number of mobile terminals (RX1, RX2, ...,RX6) in a cellular radio network over a number of directed beams (B), **characterised in that**

    - a beam configuration device (3), to define a candidate set of beams, where the major parameters of the beams are changed only slowly in relation to a feedback time of the terminals,
    - a candidate set signalling device (4), to signal to the terminals (RX1, RX2, ... , RX6) information (KS) about the beams (B) of the candidate set (KS),
    - a pilot signal transmission device (5), to emit pilot signals (PS) at short time intervals in relation to the modification time of the beams over the beams (B) of the candidate set (KS) to the terminals (RX1, RX2, ..., RX6),
    - a feedback receiving device (6), to receive acknowledgement values (RW) from the different terminals, which were each determined on the basis of SINR values determined in each case with the aid of the received pilot signals (PS) for each received beam (B),
    - and a beam allocation device (7), to allocate to the different terminals (RX1, RX2, ..., RX6), using the acknowledgement values, suitable combinations of beams (B) for a subsequent signal transmission.

10. Mobile terminal (RX1, RX2, ...,RX6) for use in a method as claimed in one of the claims 1 to 8 with

    - a receiving device (10) for receiving different beams (B) emitted by a base station (BS) and for receiving information (KSI) about a candidate set (KS, NKS) of beams (B) assigned to a terminal,
    - a beam identification device (11), to identify a received beam (B) as belonging to the candidate set (KS, NKS),
    - a beam quality determination device (12), to determine an SINR value for the beams (B) belonging to the candidate set (KS, NKS) on the basis of pilot signals (PS), which the terminal (RX1) has received in each case over the different beams (B) from the base station (BS),
    - a feedback device (13), to transmit to the base station (BS) only the acknowledgement values (RW) for the beams (B) belonging to the candidate set (KS, NKS) of the relevant terminal (RX1, RX2, ...,RX6) determined on the basis of the SINR values.

**Revendications**

1. Procédé pour l'attribution de capacités de transmission pour la transmission de signal d'une station de base (BS) d'un réseau de téléphonie mobile cellulaire à un certain nombre de terminaux mobiles (RX1, RX2, ..., RX6)

    - dans lequel la station de base (BS) envoie simultanément plusieurs faisceaux radio (B) dirigés, **caractérisé en ce que**
    - pour commencer on définit un premier ensemble de candidats (KS) de faisceaux radio (B), dont les paramètres importants ne sont modifiés que lentement par rapport à un temps de message retour des terminaux (RX1, RX2, ..., RX6),
    - des informations (KSI) relatives aux faisceaux radio (B) de l'ensemble de candidats (KS) sont signalées aux terminaux (RX1, RX2, ..., RX6) de la station de base (BS),
    - la station de base (BS) envoie, à des intervalles de temps courts par rapport au temps de modification des faisceaux radio, des signaux pilotes (PS) par les faisceaux radio (B) de l'ensemble de candidats (KS),
    - les terminaux (RX1, RX2, ..., RX6) déterminent chacun une valeur SINR à l'aide des signaux pilotes (PS) reçus pour chacun de ces faisceaux radio (B) de l'ensemble de candidats (KS),
    - les terminaux (RX1, RX2, ..., RX6) déterminent pour chaque faisceau radio (B) reçu à chaque fois une valeur de message retour (RW) déterminée sur la base de la valeur SINR concernée à la station de base (BS), et
    - des combinaisons appropriées de faisceaux radio (B) pour une transmission de signal consécutive sont attribuées par la station de base (BS) aux différents terminaux en utilisant les valeurs de message retour (RW).

**2.** Procédé selon la revendication 1, dans lequel, à partir des faisceaux radio (B) appartenant au premier ensemble de candidats (KS), on sélectionne pour chacun des terminaux un second ensemble de candidats (NKS) spécifique à l'utilisateur de faisceaux radio (B) qui est signalé à chacun des terminaux concernés (RX1, RX2, ..., RX6), et dans lequel les terminaux (RX1, RX2, ..., RX6) déterminent chacun une valeur SINR à l'aide des signaux pilotes (PS) reçus uniquement pour les faisceaux radio (B) de l'ensemble de candidats (NKS) qui leur est attribué et est spécifique à l'utilisateur, et transmettent une valeur de message retour (RW) déterminée sur la base de la valeur SINR respective à la station de base (BS).

**3.** Procédé selon la revendication 1 ou 2, dans lequel les principaux paramètres de l'ensemble de candidats (KS, NKS) concerné de faisceaux radio (B) ne sont modifiés que lentement par rapport au temps de cohérence.

**4.** Procédé selon l'une quelconque des revendications 1 à 3, dans lequel des informations relatives à la structure pilote d'un signal pilote (PS) envoyé par la suite par les faisceaux radio de l'ensemble de candidats sont transmises de la station de base (BS) aux terminaux (RX1, RX2, ..., RX6).

**5.** Procédé selon l'une quelconque des revendications 1 à 4, dans lequel chacun des terminaux (RX1, RX2, ..., RX6) détermine sur la base de la valeur SINR concernée une valeur CQI comme valeur de message retour (RW) et la transmet à la station de base (BS).

**6.** Procédé selon l'une quelconque des revendications 1 à 5, dans lequel des informations relatives aux faisceaux radio appartenant à l'ensemble de candidats et/ou aux puissances d'émission sur les faisceaux radio et/ou sur la structure pilote sont transmises par un canal d'information générale (IK) de la station de base aux terminaux.

**7.** Procédé selon l'une quelconque des revendications 1 à 6, dans lequel le premier ensemble de candidats est défini sur la base d'une grille de faisceaux radio (GOB), qui comprend un certain nombre de faisceaux radio (B) qui recouvrent une zone de couverture définie (VB) de la station de base (BS) sur toute la surface.

**8.** Procédé selon l'une quelconque des revendications 1 à 7, dans lequel les valeurs de message retour (RW) définissent chacune un schéma de modulation et de codage (MCS), avec lequel la station de base (BS) envoie par les faisceaux radio (B) individuels aux différents terminaux (RX1, RX2, ..., RX6) .

**9.** Station de base (BS) comprenant des moyens pour l'attribution de capacités de transmission pour une transmission de signal simultanée à un certain nombre de terminaux mobiles (RX1, RX2, ..., RX6) dans un réseau de téléphonie cellulaire par plusieurs faisceaux radio dirigés (B), **caractérisée par**

- un dispositif de configuration de faisceaux radio (3), afin de définir un ensemble de données de faisceaux radio, les paramètres importants des faisceaux radio n'étant modifiés que lentement par rapport à un temps de message retour des terminaux,
- un dispositif de signalisation d'ensemble de candidats (4), afin de signaler des informations (KS) relatives aux faisceaux radio (B) de l'ensemble de candidats (KS) aux terminaux (RX1, RX2, ..., RX6),
- un dispositif d'envoi de signal pilote (5), afin d'envoyer des signaux pilotes (PS) à des intervalles de temps plus courts par rapport au temps de variation des faisceaux radio par les faisceaux radio (B) de l'ensemble de candidats (KS) aux terminaux (RX1, RX2, ..., RX6),
- un dispositif de réception de message retour (6), afin de recevoir des différents terminaux des valeurs de message retour (RW) qui ont été déterminées sur la base de valeurs SINR déterminées respectivement à l'aide des signaux pilotes (PS) reçus pour chaque faisceau radio (B) reçu,
- et un dispositif d'attribution de faisceaux radio (7), afin d'attribuer aux différents terminaux (RX1, RX2, ..., RX6) des combinaisons appropriées de faisceaux radio (B) pour une transmission de signal ultérieure en utilisant les valeurs de message retour (RW).

**10.** Terminal mobile (RX1, RX2, ..., RX6) pour l'utilisation dans un procédé selon l'une quelconque des revendications 1 à 8 comprenant

- un dispositif de réception (10) pour la réception de différents faisceaux radio (B) émis par une station mobile (BS) et pour la réception d'informations (KSI) relatives à un ensemble de candidats (KS, NKS), attribué au terminal, de faisceaux radio (B),
- un dispositif d'identification de faisceaux radio (11), afin d'identifier un faisceau radio (B) reçu comme appartenant à l'ensemble de candidats (KS, NKS),

**EP 1 757 146 B1**

- un dispositif de détermination de qualité de faisceau radio (12), afin de déterminer une valeur SINR pour les faisceaux radio (B) appartenant à l'ensemble de candidats (KS, NKS) sur la base de signaux pilotes (PS) que le terminal (RX1) a reçus respectivement par les différents faisceaux radio (B) de la station de base (BS),

- un dispositif de message retour (13), afin d'envoyer des valeurs de message retour (RW) déterminées sur la base des valeurs SINR à la station de base (BS) uniquement pour les faisceaux radio (B) appartenant à l'ensemble de candidats (KS, NKS) du terminal concerné (RX1, RX2, ..., RX6).

## FIG 1

$$\underline{y}_1 = \underline{H}_1(\underline{x}_1 + \underline{x}_2 + \underline{x}_3) + \underline{n}_1$$
$$= \underline{H}_1\underline{E}_1\underline{s}_1 + \underline{H}_1(\underline{E}_2\underline{s}_2 + \underline{E}_3\underline{s}_3) + \underline{n}_1$$

$$\underline{y}_2 = \underline{H}_2(\underline{x}_1 + \underline{x}_2 + \underline{x}_3) + \underline{n}_2$$
$$= \underline{H}_2\underline{E}_2\underline{s}_2 + \underline{H}_2(\underline{E}_1\underline{s}_1 + \underline{E}_3\underline{s}_3) + \underline{n}_2$$

$$\underline{y}_3 = \underline{H}_3(\underline{x}_1 + \underline{x}_2 + \underline{x}_3) + \underline{n}_3$$
$$= \underline{H}_3\underline{E}_3\underline{s}_3 + \underline{H}_3(\underline{E}_1\underline{s}_1 + \underline{E}_2\underline{s}_2) + \underline{n}_3$$

RX1   $\underline{H}_1$   BS

$\underline{y}_1$

$\underline{x}_1 = \underline{E}_1\underline{s}_1$

RX2   $\underline{H}_2$

$\underline{y}_2$

$\underline{x}_2 = \underline{E}_2\underline{s}_2$

RX3   $\underline{x}_3 = \underline{E}_3\underline{s}_3$

$\underline{y}_3$

$\underline{H}_3$

## FIG 2

BS   AA   B   RX1

für RX1   $\underline{s}_{11}$, $\underline{s}_{12}$

für RX2   $\underline{s}_{21}$

für RX3   $\underline{s}_{31}$, $\underline{s}_{32}$, $\underline{s}_{33}$

$$[\underline{E}_1 \underline{E}_2 \underline{E}_3] = [\underline{f}_{11} \underline{f}_{12} \underline{f}_{21} \underline{f}_{31} \underline{f}_{32} \underline{f}_{33}]$$

$$\underline{W}_1^H = \begin{bmatrix} \underline{w}_{11}^H \\ \underline{w}_{12}^H \end{bmatrix} \quad \begin{matrix} \hat{\underline{s}}_{11} \\ \hat{\underline{s}}_{12} \end{matrix}$$

RX2

$$\underline{W}_2^H = \underline{w}_{21}^H \quad \hat{\underline{s}}_{21}$$

RX3

$$\underline{W}_3^H = \begin{bmatrix} \underline{w}_{31}^H \\ \underline{w}_{32}^H \\ \underline{w}_{33}^H \end{bmatrix} \quad \begin{matrix} \hat{\underline{s}}_{31} \\ \hat{\underline{s}}_{32} \\ \hat{\underline{s}}_{33} \end{matrix}$$

B

FIG 3

# FIG 4

# FIG 5

# FIG 6

$$\underline{y}_1 = \underline{H}_1(\underline{x}_1 + \underline{x}_2 + \underline{x}_3) + \underline{n}_1$$
$$= \underline{H}_1 \underline{F}_\Sigma \underline{s}_\Sigma + \underline{n}_1$$
$$= \underline{G}_{1\Sigma} \underline{s}_\Sigma + \underline{n}_1$$

$$\underline{y}_2 = \underline{H}_2(\underline{x}_1 + \underline{x}_2 + \underline{x}_3) + \underline{n}_2$$
$$= \underline{H}_2 \underline{F}_\Sigma \underline{s}_\Sigma + \underline{n}_2$$
$$= \underline{G}_{2\Sigma} \underline{s}_\Sigma + \underline{n}_2$$

$$\underline{y}_3 = \underline{H}_3(\underline{x}_1 + \underline{x}_2 + \underline{x}_3) + \underline{n}_3$$
$$= \underline{H}_3 \underline{F}_\Sigma \underline{s}_\Sigma + \underline{n}_3$$
$$= \underline{G}_{3\Sigma} \underline{s}_\Sigma + \underline{n}_3$$

RX1   $\underline{H}_1$   BS

$\underline{y}_1$   $\underline{x}_1 = \underline{F}_\Sigma \underline{\tilde{s}}_1$

RX2   $\underline{H}_2$

$\underline{y}_2$   $\underline{x}_2 = \underline{F}_\Sigma \underline{\tilde{s}}_2$

RX3   $\underline{x}_3 = \underline{F}_\Sigma \underline{\tilde{s}}_3$

$\underline{y}_3$   $\underline{H}_3$

FIG 7

## FIG 8

BS

AA

3  1  4

KS1

PS

5

RW

7  6

2

## FIG 9

$A_{11}$  $A_{12}$

RX1, RX2, RX3, RX4, RX5, RX6

10  8  13

11  9  12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003125040 A1